(19) 

Europäisches
Patentamt
European
Patent Office
Office européen
des brevets

(11) **EP 3 264 841 A1**

(12) **EUROPEAN PATENT APPLICATION**
published in accordance with Art. 153(4) EPC

(43) Date of publication:
**03.01.2018 Bulletin 2018/01**

(21) Application number: **15885038.8**

(22) Date of filing: **19.03.2015**

(51) Int Cl.:
**H04W 72/04** (2009.01)

(86) International application number:
**PCT/CN2015/074582**

(87) International publication number:
**WO 2016/145655 (22.09.2016 Gazette 2016/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(71) Applicant: **Huawei Technologies Co., Ltd.
Longgang District
Shenzhen, Guangdong 518129 (CN)**

(72) Inventors:
• **CHAI, Li
Shenzhen
Guangdong 518129 (CN)**
• **LIN, Bo
Shenzhen
Guangdong 518129 (CN)**
• **LI, Yajuan
Shenzhen
Guangdong 518129 (CN)**

(74) Representative: **Epping - Hermann - Fischer
Patentanwaltsgesellschaft mbH
Schloßschmidstraße 5
80639 München (DE)**

(54) **METHOD, DEVICE AND SYSTEM FOR HYBRID AUTOMATIC REPEAT REQUEST MANAGEMENT**

(57) The present invention provides a hybrid automatic repeat request management method, an apparatus, and a system. The method includes: determining, by a first network node according to at least one of a first correspondence between a carrier set and a hybrid automatic repeat request HARQ process or a second correspondence between the carrier set and a HARQ entity, a HARQ process and/or a HARQ entity corresponding to the carrier set, where the carrier set includes at least one of: at least one uplink UL carrier set or at least one downlink DL carrier set; and receiving and/or sending, by the first network node, data and/or signaling according to the HARQ process and/or the HARQ entity by using the carrier set. This resolves a problem that transmission reliability is relatively low because a second network node cannot schedule multiple carriers simultaneously and same data cannot be effectively transmitted on the multiple carriers.

A first network node determines, according to at least one of a first correspondence between a carrier set and a hybrid automatic repeat request HARQ process or a second correspondence between the carrier set and a HARQ entity, the HARQ process and/or the HARQ entity corresponding to the carrier set — 101

The first network node receives and/or sends data and/or signaling according to the HARQ process or the HARQ entity by using the carrier set — 102

FIG. 1

**EP 3 264 841 A1**

## Description

### TECHNICAL FIELD

The present invention relates to the field of wireless communications technologies, and in particular, to a hybrid automatic repeat request management method, an apparatus, and a system.

### BACKGROUND

With further evolution of a Long Term Evolution (LTE, Long Term Evolution) network, a network node provides a service for user equipment (UE, User Equipment). The network node communicates with the UE by using an uplink/downlink. The network node generally schedules and allocates radio resources, and the UE receives downlink (DL, Downlink) data from the network node on a carrier. When the DL data is received, transmission is failure-prone, reducing transmission efficiency. Generally, a hybrid automatic repeat request (HARQ, Hybrid Automatic Repeat Request) technology is used to resolve the foregoing problem, so as to improve communication reliability and increase a transmission rate. In the Institute of Electrical and Electronics Engineers wireless metropolitan area network standard (IEEE802. 16e, Institute of Electrical and Electronics Engineers 802. 16e), there are two main modes in HARQ: a chase combining (CC, Chase Combing) mode and an incremental redundancy (IR, Incremental Redundancy) mode.

In the prior art, HARQ management mainly includes the following parts.

An asynchronous adaptive HARQ technology is used in an LTE downlink system, and the asynchronous HARQ can avoid a performance loss caused by resource allocation conflict during retransmission. A synchronous non-adaptive HARQ technology is used in an LTE uplink system. This is mainly because a network node cannot precisely estimate a signal to interference ratio (SINR, Signal to Interference Ratio) value of each user due to a complex LTE uplink and uncertainty of interference from another cell. Consequently, an imprecise modulation and coding scheme (MCS) may be selected on the LTE uplink, and the synchronous non-adaptive HARQ technology brings a relatively small quantity of signaling overheads.

Each carrier can be separately scheduled only by a network node, and UE supports a maximum of five carriers. Therefore, when 32 carriers are introduced in massive carrier aggregation (MCA, Massive Carrier Aggregation), in an original HARQ technology, the network node cannot schedule multiple carriers simultaneously, and same data cannot be effectively transmitted on the multiple carriers. Consequently, transmission efficiency of a carrier is relatively low, and reliability is not high.

## SUMMARY

The present invention provides a hybrid automatic repeat request management method, so as to resolve a problem in the prior art that transmission reliability is relatively low because a base station cannot schedule multiple carriers simultaneously and same data cannot be effectively transmitted on the multiple carriers.

A first aspect of the present invention provides a hybrid automatic repeat request management method, including:

determining, by a first network node according to at least one of a first correspondence between a carrier set and a hybrid automatic repeat request HARQ process or a second correspondence between the carrier set and a HARQ entity, a HARQ process and/or a HARQ entity corresponding to the carrier set, where the carrier set includes at least one of: at least one uplink UL carrier set or at least one downlink DL carrier set; and
receiving and/or sending, by the first network node, data and/or signaling according to the HARQ process and/or the HARQ entity by using the carrier set.

With reference to the first aspect, in a first possible implementation of the first aspect of the present invention, the HARQ process is further obtained according to at least one of the following correspondences: a third correspondence, a fourth correspondence, a fifth correspondence, a sixth correspondence, a seventh correspondence, an eighth correspondence, a ninth correspondence, a tenth correspondence, an eleventh correspondence, a twelfth correspondence, a thirteenth correspondence, a fourteenth correspondence, a fifteenth correspondence, a sixteenth correspondence, a seventeenth correspondence, or an eighteenth correspondence, where
the third correspondence is a correspondence among at least one carrier, at least one subframe, and a HARQ process;
the fourth correspondence is a correspondence among at least one carrier, at least one subframe, a HARQ process, and a HARQ entity;
the fifth correspondence is a correspondence among at least one carrier, a data sending manner, and a HARQ process;
the sixth correspondence is a correspondence among at least one carrier, a data sending manner, a HARQ process, and a HARQ entity;
the seventh correspondence is a correspondence among at least one carrier, at least one physical resource block PRB, at least one subframe, and a HARQ process;
the eighth correspondence is a correspondence among at least one carrier, at least one PRB, at least one subframe, a HARQ process, and a HARQ entity;
the ninth correspondence is a correspondence among at least one cell index, at least one PRB identifier, at least one transmission time interval TTI number, and a HARQ process;

the tenth correspondence is a correspondence among at least one cell index, at least one PRB identifier, at least one transmission time interval TTI number, a HARQ process, and a HARQ entity;

the eleventh correspondence is a correspondence among at least one carrier, at least one subframe, a redundancy version, and a HARQ process;

the twelfth correspondence is a correspondence among at least one carrier, at least one subframe, a redundancy version, a HARQ process, and a HARQ entity;

the thirteenth correspondence is a correspondence among at least one carrier, a data sending manner, a redundancy version, and a HARQ process;

the fourteenth correspondence is a correspondence among at least one carrier, a data sending manner, a redundancy version, a HARQ process, and a HARQ entity;

the fifteenth correspondence is a correspondence among at least one carrier, at least one PRB, at least one subframe, a redundancy version, and a HARQ process;

the sixteenth correspondence is a correspondence among at least one carrier, at least one PRB, at least one subframe, a redundancy version, a HARQ process, and a HARQ entity;

the seventeenth correspondence is a correspondence among at least one cell index, an identifier of the at least one PRB, at least one transmission time interval TTI number, a redundancy version, and a HARQ process;

the eighteenth correspondence is a correspondence among at least one cell index, an identifier of the at least one PRB, at least one transmission time interval TTI number, a redundancy version, a HARQ process, and a HARQ entity; and

the carrier includes an UL carrier or/and a DL carrier.

With reference to the first aspect, or the first possible implementation of the first aspect, in a second possible implementation of the first aspect of the present invention, the HARQ entity is further obtained according to at least one of the following correspondences: a nineteenth correspondence, the fourth correspondence, a twentieth correspondence, the sixth correspondence, a twenty-first correspondence, the eighth correspondence, a twenty-second correspondence, the ninth correspondence, a twenty-third correspondence, the twelfth correspondence, a twenty-fourth correspondence, the fourteenth correspondence, a twenty-fifth correspondence, the sixteenth correspondence, a twenty-sixth correspondence, or the eighteenth correspondence, where the nineteenth correspondence is a correspondence among at least one carrier, at least one subframe, and a HARQ entity;

the fourth correspondence is a correspondence among at least one carrier, at least one subframe, a HARQ process, and a HARQ entity;

the twentieth correspondence is a correspondence among at least one carrier, a data sending manner, and a HARQ entity;

the sixth correspondence is a correspondence among at least one carrier, a data sending manner, a HARQ process, and a HARQ entity;

the twenty-first correspondence is a correspondence among at least one carrier, at least one PRB, at least one subframe, and a HARQ entity;

the eighth correspondence is a correspondence among at least one carrier, at least one PRB, at least one subframe, a HARQ process, and a HARQ entity;

the twenty-second correspondence is a correspondence among at least one cell index, at least one PRB identifier, at least one transmission time interval TTI number, and a HARQ entity;

the ninth correspondence is a correspondence among at least one cell index, at least one PRB identifier, at least one transmission time interval TTI number, a HARQ process, and a HARQ entity;

the twenty-third correspondence is a correspondence among at least one carrier, at least one subframe, a redundancy version, and a HARQ entity;

the twelfth correspondence is a correspondence among at least one carrier, at least one subframe, a redundancy version, a HARQ process, and a HARQ entity;

the twenty-fourth correspondence is a correspondence among at least one carrier, a data sending manner, a redundancy version, and a HARQ entity;

the fourteenth correspondence is a correspondence among at least one carrier, a data sending manner, a redundancy version, a HARQ process, and a HARQ entity;

the twenty-fifth correspondence is a correspondence among at least one carrier, at least one PRB, at least one subframe, a redundancy version, and a HARQ entity;

the sixteenth correspondence is a correspondence among at least one carrier, at least one PRB, at least one subframe, a redundancy version, a HARQ process, and a HARQ entity;

the twenty-sixth correspondence is a correspondence among at least one cell index, an identifier of the at least one PRB, at least one transmission time interval TTI number, a redundancy version, and a HARQ entity;

the eighteenth correspondence is a correspondence among at least one cell index, an identifier of the at least one PRB, at least one transmission time interval TTI number, a redundancy version, a HARQ process, and a HARQ entity; and

the carrier includes an UL carrier or a DL carrier.

With reference to any one of the first aspect, or the first or the second possible implementation of the first aspect, in a third possible implementation of the first aspect of the present invention, the first correspondence to the twenty-sixth correspondence are indicated by at least one of radio resource control RRC signaling, media access control control element MAC CE signaling, or physical downlink control channel PDCCH signaling that is sent by the second network node; and

that the first correspondence to the twenty-sixth correspondence are indicated by physical downlink control channel PDCCH signaling includes:
a HARQ process number of each carrier in the carrier set is indicated by the PDCCH signaling, where the PDCCH signaling carries indication information used to indicate at least one carrier or indication information used to indicate the at least one carrier set.

With reference to any one of the first aspect, or the first to the third possible implementations of the first aspect, in a fourth possible implementation of the first aspect of the present invention, the carrier set includes a first carrier set that shares a same HARQ process, and the receiving data and sending signaling by using the carrier set includes at least one of the following steps:

receiving, by the first network node, first data by using the first carrier set, decoding the first data, to obtain a decoding result, and sending a first message to the second network node according to a first decoding result, where when the first decoding result indicates that the decoding succeeds, the first message includes an acknowledgement ACK message, or when the first decoding result indicates that the decoding fails, the first message includes a non-acknowledgement NACK message; and the first message is a signaling message sent to the second network node by the first network node in a first time period in any one of the following manners: any carrier in the first carrier set, all carriers in the first carrier set, a carrier preconfigured according to radio resource control RRC signaling or media access control MAC signaling, or an UL carrier corresponding to a DL carrier corresponding to the first decoding result in the first carrier set; or
receiving, by the first network node, the first data by using the first carrier set, decoding the first data corresponding to each carrier in the first carrier set, to obtain a decoding result corresponding to each carrier, and sending multiple second messages to the second network node according to second decoding results, where when the second decoding result indicates that the decoding succeeds, the second message includes the ACK message, or when the second decoding result indicates that the decoding fails, the second message includes the NACK message; and the second message is a signaling message that is corresponding to each carrier in the first carrier set and that is sent to the second network node by the first network node on each carrier, or a signaling message sent to the second network node on an UL carrier corresponding to a DL carrier that is corresponding to the second decoding result and that is in the first carrier set.

With reference to the fourth possible implementation of the first aspect, in a fifth possible implementation of the first aspect of the present invention, the first message for the second network node meets at least one of the following conditions:

when the first network node successfully decodes the first data received on each carrier in the first carrier set, the first message includes the ACK message;
when the first network node successfully decodes the first data received on any carrier in the first carrier set, the first message includes the ACK message;
when the first network node fails to decode the first data received on each carrier in the first carrier set, the first message includes the NACK message; or
when the first network node fails to decode the first data received on any carrier in the first carrier set, the first message includes the NACK message.

With reference to any one of the first aspect, or the first to the fifth possible implementations of the first aspect, in a sixth possible implementation of the first aspect of the present invention, the carrier set includes a second carrier set that shares a same HARQ process, and the sending data and receiving signaling by using the carrier set includes at least one of the following steps:

sending, by the first network node, second data to the second network node by using the second carrier set, and after receiving a third message, when determining that the third message includes a NACK message corresponding to the second carrier set, determining that transmission of the second data fails, or when determining that the third message includes an ACK message corresponding to the second carrier set, determining that the second data is successfully transmitted, where the third message is a signaling message that is corresponding to the second carrier set and that is sent to the first network node by the second network node in a preset second time period in any one of the following manners: any carrier in the second carrier set, all carriers in the second carrier set, a carrier preconfigured according to the RRC signaling or the MAC signaling, or a carrier for sending downlink control information DCI; or
sending, by the first network node, the second data to the second network node by using the second carrier set; and after receiving fourth messages corresponding to all carriers in the second carrier set, if each of the fourth messages includes an ACK message, determining that the second data is successfully transmitted, or if any one of the fourth messages includes an ACK message, determining that the second data is successfully transmitted; or if each of the fourth messages includes a NACK message, determining that transmission of the second data fails, or if any one of the fourth messages includes a NACK message, determining that transmission of the second data fails; or if none of the fourth messages is received, determining that transmission of the second data fails, or if any one of the fourth messages is not received, determining that transmission of the second data fails, where the fourth message is a signaling message that is corresponding to each carrier in the second carrier set and that is sent to the first network node by the second network node on each carrier.

With reference to the sixth possible implementation of the first aspect, in a seventh possible implementation of the first aspect of the present invention, after the sending, by the first network node, the second data to the second network node by using the second carrier set, the sending, by the first network node, data by using the carrier set specifically includes at least one of the following:

selecting, by the first network node, at least one carrier from the second carrier set to retransmit the second data;

performing, by the first network node on the carrier corresponding to the third message or the fourth message, an operation of retransmitting the second data;

when the fourth message that is corresponding to each carrier and that is received by the first network node is a NACK message, starting an operation of retransmitting the second data;

when the fourth message that is corresponding to any carrier and that is received by the first network node is a NACK message, starting an operation of retransmitting the second data;

when the first network node does not receive the fourth messages corresponding to all carriers in the second carrier set, starting an operation of retransmitting the second data; or

when the first network node does not receive the fourth message corresponding to any carrier in the second carrier set, starting an operation of retransmitting the second data.

With reference to any one of the first aspect, or the first to the seventh possible implementations of the first aspect, in an eighth possible implementation of the first aspect of the present invention, after the second data is retransmitted, the method further includes:

counting, by the first network node, a variable Current-Transmit-Number corresponding to each carrier in the carrier set on which the second data is retransmitted, where all carriers in the carrier set are in a one-to-one correspondence with variables Current-Transmit-Number; or

counting, by the first network node, variables Current-Transmit-Number corresponding to all carriers in the carrier set, where

a previous variable Current-Transmit-Number is incremented by 1 each time after the first network node sends the second data on any carrier in the carrier set; and

the first network node further performs at least one of the following steps:

clearing, by the first network node, a HARQ buffer when determining that a variable Current-Transmit-Number of the any carrier reaches a preset maximum value;

clearing, by the first network node, the HARQ buffer when determining that a variable Current-Transmit-Number of each carrier in the carrier set reaches a preset maximum value; or

clearing, by the first network node, the HARQ buffer when determining that each of the variables Current-Transmit-Number corresponding to all carriers in the carrier set reaches a preset maximum value.

With reference to any one of the fifth to the eighth possible implementations of the first aspect, in a ninth possible implementation of the first aspect of the present invention, after the sending a first message to the second network node according to a first decoding result, or after the sending second messages to the second network node according to a second decoding result, the receiving data by using the carrier set specifically further includes at least one of the following steps:

receiving, by the first network node, the first data retransmitted by the second network node according to a preset third time period by using the first carrier set, where optionally, each carrier in the first carrier set is identified by a new data indicator NDI, and the NDI is used to indicate that the first data currently transmitted on a carrier is new data or retransmitted data; or

after receiving a NACK response returned by the second network node according to the NACK or receiving no NACK response within a preset time, receiving, by the first network node, the first data retransmitted by the second network node by using the third carrier set, where optionally, each carrier in the third carrier set is identified by an NDI, the NDI is used to indicate that the first data currently transmitted on a carrier is new data or retransmitted data, and the third carrier set is a carrier set with a failure in transmitting the first data, of the first carrier set.

With reference to the fifth to the ninth possible implementations of the first aspect, in a tenth possible implementation of the first aspect of the present invention, after the sending, by the first network node, the second data to the second network node by using the second carrier set, the sending data by using the carrier set specifically further includes at least one of the following steps:

retransmitting, by the first network node, the second data to the second network node according to a preset fourth time period by using the second carrier set, where optionally, each carrier in the second carrier set is identified by a new data indicator NDI, and the NDI is used to indicate that the second data currently transmitted on a carrier is new data or retransmitted data; or
after determining that transmission of the second data fails, retransmitting, by the first network node, the second data to the second network node by using a fourth carrier set, where optionally, each carrier in the eighth carrier set is identified by an NDI, the NDI is used to indicate that the fourth data currently transmitted on a carrier is new data or retransmitted data, and the fourth carrier set is an UL carrier set with a failure in transmitting the second data, of the second carrier set.

With reference to any one of the first aspect, or the first to the tenth possible implementations of the first aspect, in an eleventh possible implementation of the first aspect of the present invention, the carrier set includes a fifth carrier set that is used to send the same data and that uses a separate HARQ process, and the receiving signaling and sending data by using the carrier set specifically includes at least one of the following steps:

sending, by the first network node, third data to the second network node by using the fifth carrier set, and after receiving a fifth message, when determining that the fifth message includes a NACK message corresponding to the fifth carrier set, determining that transmission of the third data fails, or when determining that the fifth message includes an ACK message corresponding to the fifth carrier set, determining that the third data is successfully transmitted, where the fifth message is a signaling message that is corresponding to the second carrier set and that is sent to the first network node by the second network node in a preset fifth time period in any one of the following manners: any carrier in the fifth carrier set, all carriers in the fifth carrier set, a carrier preconfigured according to the RRC signaling or the MAC signaling, or a carrier for sending the DCI; or
sending, by the first network node, the third data to the second network node by using the fifth carrier set, and after receiving sixth messages, when determining that the sixth messages include NACK messages corresponding to the fifth carrier set used to send the third data, determining that transmission of the third data fails, or when determining that the sixth messages include at least one ACK message, determining that the third data is successfully transmitted, where the sixth message is a signaling message that is corresponding to each carrier in the fifth carrier set and that is sent to the first network node by the second network node on each carrier.

With reference to any one of the first aspect, or the first to the eleventh possible implementations of the first aspect, in a twelfth possible implementation of the first aspect of the present invention, the carrier set includes a sixth carrier set that is used to send the same data and that uses a separate HARQ process, and the receiving data and sending signaling by using the carrier set includes at least one of the following steps:

receiving, by the first network node, fourth data by using the sixth carrier set, decoding the fourth data, and sending a seventh message to the second network node according to a third decoding result, where when the third decoding result indicates that the decoding succeeds, the seventh message includes the ACK message, or when the third decoding result indicates that the decoding fails, the seventh message includes the NACK message; and the seventh message is a signaling message sent to the second network node by the first network node in a sixth time period in any one of the following manners: any carrier in the sixth carrier set, all carriers in the sixth carrier set, a carrier preconfigured according to the RRC signaling or the MAC signaling, or an UL carrier corresponding to a DL carrier that is corresponding to the third decoding result and that is in the sixth carrier set; or
receiving, by the first network node, the fourth data by using the sixth carrier set, decoding the fourth data, and sending an eighth message to the second network node according to a fourth decoding result, where when the fourth decoding result indicates that the decoding succeeds, the fourth message includes the ACK message, or when the fourth decoding result indicates that the decoding fails, the eighth message includes the NACK message; and the eighth message is a signaling message that is corresponding to each carrier in the sixth carrier set and that is sent to the second network node by the first network node on each carrier, or a signaling message sent to the second network node on an UL carrier corresponding to a DL carrier that is corresponding to the fourth decoding result and that is in the sixth carrier set.

With reference to any one of the first aspect, or the first to the twelfth possible implementations of the first aspect, in a thirteenth possible implementation of the first aspect of the present invention, after the sending a seventh message to the second network node according to a third decoding result, or after the sending an eighth message to the second network node according to a fourth decoding result, the receiving data by using the carrier set specifically further includes at least one of the following steps:

retransmitting, by the first network node, the third data to the second network node according to a preset seventh time period by using the sixth carrier set, where optionally, each carrier in the sixth carrier set is identified by a new data indicator NDI, and the NDI is used to indicate that the third data currently transmitted on a carrier is new data or retransmitted data; or

after determining that transmission of the third data fails, retransmitting, by the first network node, the third data to the second network node by using an eighth carrier set, where optionally, each carrier in the eighth carrier set is identified by an NDI, the NDI is used to indicate that the third data currently transmitted on a carrier is new data or retransmitted data, and the eighth carrier set is a carrier set with a failure in transmitting the third data, of the sixth carrier set.

With reference to any one of the first aspect, or the first to the thirteenth possible implementations of the first aspect, in a fourteenth possible implementation of the first aspect of the present invention, after the determining that transmission of the third data fails, the sending data by using the carrier set specifically further includes at least one of the following steps:

receiving, by the first network node, the fourth data retransmitted by the second network node according to a preset sixth time period by using the fifth carrier set, where optionally, each carrier in the fifth carrier set is identified by a new data indicator NDI, and the NDI is used to indicate that the fourth data currently transmitted on a carrier is new data or retransmitted data; or

after the first network node receives a NACK response returned by the second network node according to the NACK or receives no NACK response within the preset time, receiving, by the first network node, the fourth data retransmitted by the second network node by using a seventh carrier set, where optionally, each carrier in the seventh carrier set is identified by an NDI, the NDI is used to indicate that the fourth data currently transmitted on a carrier is new data or retransmitted data, and the seventh carrier set is a carrier set with a failure in transmitting the fourth data, of the fifth carrier set.

With reference to any one of the seventh to the fourteenth possible implementations of the first aspect, in a fifteenth possible implementation of the first aspect of the present invention, the first time period, the second time period, the fifth time period, or the sixth time period is obtained according to any one of the following:

a different service type configuration;
a different data radio bearer DRB configuration;
a different carrier configuration;
a different HARQ process configuration; or
a configuration of the RRC signaling, the MAC signaling, or Packet Data Convergence Protocol PDCP signaling.

With reference to any one of the first aspect, or the first to the fifteenth possible implementations of the first aspect, in a sixteenth possible implementation of the first aspect of the present invention, a HARQ process of each carrier is scheduled by a corresponding physical downlink control channel PDCCH, a HARQ process number and a redundancy version number that are corresponding to each carrier are indicated by the DCI, each carrier is uniquely corresponding to the PDCCH, and the DCI carries indication information of multiple carriers or indication information of the carrier set; or,

the shared HARQ process is scheduled by a corresponding shared PDCCH, a HARQ process number and a redundancy version number that are corresponding to each DL carrier are indicated by the DCI, the shared HARQ process is uniquely corresponding to the shared PDCCH, the shared HARQ process is in a one-to-one correspondence with the carrier set, and there is at least one shared HARQ process.

With reference to any one of the first aspect, or the first to the sixteenth possible implementations of the first aspect, in a seventeenth possible implementation of the first aspect of the present invention, when the carrier set includes one carrier, the carrier includes multiple scheduling units for transmitting same data; or when the carrier set includes more than two carriers, same data is transmitted on each carrier in the carrier set.

Optionally, on a basis of any one of the first to the seventeenth optional embodiments, in an eighteenth optional embodiment of an embodiment of the present invention, after the receiving, by the first network node, data by using the carrier set, the method further includes:

combining, by the first network node, data transmitted by using each carrier set of the carrier set, to obtain the data, decoding the data, and sending, to the second network node according to a decoding result, a signaling message corresponding to the decoding result.

With reference to any one of the first aspect, or the first to the eighteenth possible implementations of the first aspect, in a nineteenth possible implementation of the first aspect of the present invention, when the first network node is user equipment UE, the receiving and/or sending, by the first network node, data and/or signaling by using the carrier set specifically includes one of the following steps:

receiving, by the UE, at least one of DL data or DL signaling by using the at least one DL carrier set; or sending, by the UE, at least one of UL data or UL signaling by using the at least one UL carrier set.

A second aspect of the present invention provides a network node, including:

a processing module, configured to determine, according to at least one of a first correspondence between a carrier set and a hybrid automatic repeat request HARQ process or a second correspondence between the carrier set and a HARQ entity, a HARQ process and/or a HARQ entity corresponding to the carrier set, where the carrier set includes at least one of: at least one uplink UL carrier set or at least one downlink DL carrier set; and

a transmission module, configured to receive and/or send data and/or signaling according to the HARQ process and/or the HARQ entity by using the carrier set.

With reference to the second aspect, in a first implementation of the second aspect of the present invention, the HARQ process is further obtained according to at least one of the following correspondences: a third correspondence, a fourth correspondence, a fifth correspondence, a sixth correspondence, a seventh correspondence, an eighth correspondence, a ninth correspondence, a tenth correspondence, an eleventh correspondence, a twelfth correspondence, a thirteenth correspondence, a fourteenth correspondence, a fifteenth correspondence, a sixteenth correspondence, a seventeenth correspondence, or an eighteenth correspondence, where

the third correspondence is a correspondence among at least one carrier, at least one subframe, and a HARQ process;

the fourth correspondence is a correspondence among at least one carrier, at least one subframe, a HARQ process, and a HARQ entity;

the fifth correspondence is a correspondence among at least one carrier, a data sending manner, and a HARQ process;

the sixth correspondence is a correspondence among at least one carrier, a data sending manner, a HARQ process, and a HARQ entity;

the seventh correspondence is a correspondence among at least one carrier, at least one physical resource block PRB, at least one subframe, and a HARQ process;

the eighth correspondence is a correspondence among at least one carrier, at least one PRB, at least one subframe, a HARQ process, and a HARQ entity;

the ninth correspondence is a correspondence among at least one cell index, at least one PRB identifier, at least one transmission time interval TTI number, and a HARQ process;

the tenth correspondence is a correspondence among at least one cell index, at least one PRB identifier, at least one transmission time interval TTI number, a HARQ process, and a HARQ entity;

the eleventh correspondence is a correspondence among at least one carrier, at least one subframe, a redundancy version, and a HARQ process;

the twelfth correspondence is a correspondence among at least one carrier, at least one subframe, a redundancy version, a HARQ process, and a HARQ entity;

the thirteenth correspondence is a correspondence among at least one carrier, a data sending manner, a redundancy version, and a HARQ process;

the fourteenth correspondence is a correspondence among at least one carrier, a data sending manner, a redundancy version, a HARQ process, and a HARQ entity;

the fifteenth correspondence is a correspondence among at least one carrier, at least one PRB, at least one subframe, a redundancy version, and a HARQ process;

the sixteenth correspondence is a correspondence among at least one carrier, at least one PRB, at least one subframe, a redundancy version, a HARQ process, and a HARQ entity;

the seventeenth correspondence is a correspondence among at least one cell index, an identifier of the at least one PRB, at least one transmission time interval TTI number, a redundancy version, and a HARQ process;

the eighteenth correspondence is a correspondence among at least one cell index, an identifier of the at least one PRB, at least one transmission time interval TTI number, a redundancy version, a HARQ process, and a HARQ entity; and the carrier includes an UL carrier or/and a DL carrier.

With reference to the second aspect or the first implementation, in a second implementation of the second aspect of the present invention, the HARQ entity is further obtained according to at least one of the following correspondences: a nineteenth correspondence, the fourth correspondence, a twentieth correspondence, the sixth correspondence, a twenty-first correspondence, the eighth correspondence, a twenty-second correspondence, the ninth correspondence, a twenty-third correspondence, the twelfth correspondence, a twenty-fourth correspondence, the fourteenth correspondence, a twenty-fifth correspondence, the sixteenth correspondence, a twenty-sixth correspondence, or the eighteenth correspondence, where

the nineteenth correspondence is a correspondence among at least one carrier, at least one subframe, and a HARQ entity;

the fourth correspondence is a correspondence among at least one carrier, at least one subframe, a HARQ process, and a HARQ entity;

the twentieth correspondence is a correspondence among at least one carrier, a data sending manner, and a HARQ entity;

the sixth correspondence is a correspondence among at least one carrier, a data sending manner, a HARQ process, and a HARQ entity;

the twenty-first correspondence is a correspondence among at least one carrier, at least one PRB, at least one subframe, and a HARQ entity;

the eighth correspondence is a correspondence among at least one carrier, at least one PRB, at least one subframe, a HARQ process, and a HARQ entity;

the twenty-second correspondence is a correspondence among at least one cell index, at least one PRB identifier, at least one transmission time interval TTI number, and a HARQ entity;

the ninth correspondence is a correspondence among at least one cell index, at least one PRB identifier, at least one transmission time interval TTI number, a HARQ process, and a HARQ entity;

the twenty-third correspondence is a correspondence among at least one carrier, at least one subframe, a redundancy version, and a HARQ entity;

the twelfth correspondence is a correspondence among at least one carrier, at least one subframe, a redundancy version, a HARQ process, and a HARQ entity;

the twenty-fourth correspondence is a correspondence among at least one carrier, a data sending manner, a redundancy version, and a HARQ entity;

the fourteenth correspondence is a correspondence among at least one carrier, a data sending manner, a redundancy version, a HARQ process, and a HARQ entity;

the twenty-fifth correspondence is a correspondence among at least one carrier, at least one PRB, at least one subframe, a redundancy version, and a HARQ entity;

the sixteenth correspondence is a correspondence among at least one carrier, at least one PRB, at least one subframe, a redundancy version, a HARQ process, and a HARQ entity;

the twenty-sixth correspondence is a correspondence among at least one cell index, an identifier of the at least one PRB, at least one transmission time interval TTI number, a redundancy version, and a HARQ entity;

the eighteenth correspondence is a correspondence among at least one cell index, an identifier of the at least one PRB, at least one transmission time interval TTI number, a redundancy version, a HARQ process, and a HARQ entity; and

the carrier includes an UL carrier or a DL carrier.

With reference to any one of the second aspect, or the first or the second implementation of the second aspect, in a third implementation of the second aspect of the present invention, the first correspondence to the twenty-sixth correspondence are indicated by at least one of radio resource control RRC signaling, media access control control element MAC CE signaling, or physical downlink control channel PDCCH signaling that is sent by a second network node; and

that the first correspondence to the twenty-sixth correspondence are indicated by physical downlink control channel PDCCH signaling includes:

a HARQ process number of each carrier in the carrier set is indicated by the PDCCH signaling, where the PDCCH signaling carries indication information used to indicate at least one carrier or indication information used to indicate the at least one carrier set.

With reference to any one of the second aspect, or the first to the third implementations of the second aspect, in a fourth implementation of the second aspect of the present invention, the carrier set includes a first carrier set that shares a same HARQ process, and the transmission module is specifically configured to perform at least one of the following steps:

receiving first data by using the first carrier set, decoding the first data, and sending a first message to the second network node according to a first decoding result, where when the first decoding result indicates that the decoding succeeds, the first message includes an acknowledgement ACK message, or when the first decoding result indicates that the decoding fails, the first message includes a non-acknowledgement NACK message; and the first message is a signaling message sent to the second network node in a first time period in any one of the following manners: any carrier in the first carrier set, all carriers in the first carrier set, a carrier preconfigured according to radio resource control RRC signaling or media access control MAC signaling, or an UL carrier corresponding to a DL carrier corresponding to the first decoding result in the first carrier set; or receiving the first data by using the first carrier set, decoding the first data corresponding to each carrier in the first carrier set, and sending multiple second messages to the second network node according to second decoding results, where when the second decoding result indicates that the decoding succeeds, the second message includes the ACK message, or when the second decoding result indicates that the decoding fails, the second message includes the NACK message; and the second message is a signaling message that is corresponding to each carrier in the first carrier set and that is sent to the second network node on each carrier, or a signaling message sent to the second network node on an UL carrier corresponding to a DL carrier that is corresponding to the second decoding result and that is in the first carrier set.

With reference to the fourth implementation of the second aspect, in a fifth implementation of the second aspect of the present invention, the first message meets at least one of the following conditions:

when the first data received on each carrier in the first carrier set is successfully decoded, the first message includes the ACK message;

when the first data received on any carrier in the first carrier set is successfully decoded, the first message includes the ACK message;

when the first data received on each carrier in the first carrier set fails to be decoded, the first message includes the NACK message; or

when the first data received on any carrier in the first carrier set fails to be decoded, the first message includes the NACK message.

With reference to any one of the second aspect, or the first to the fifth implementations of the second aspect, in a sixth implementation of the second aspect of the present invention, the carrier set includes a second carrier set that shares a same HARQ process, and the transmission module is further configured to perform at least one of the following steps:

sending second data to the second network node by using the second carrier set, and after receiving a third message corresponding to each carrier in the second carrier set, when determining that the third message includes a NACK message corresponding to the second carrier set, determining that transmission of the second data fails, or when determining that the third message includes an ACK message corresponding to the second carrier set, determining that the second data is successfully transmitted, where the third message is a signaling message that is corresponding to the second carrier set and that is sent to the network node by the second network node in a preset second time period in any one of the following manners: any carrier in the second carrier set, all carriers in the second carrier set, a carrier preconfigured according to the RRC signaling or the MAC signaling, or a carrier for sending downlink control information DCI; or

sending the second data to the second network node by using the second carrier set; and after receiving fourth messages, if each of the fourth messages includes an ACK message, determining that the second data is successfully transmitted, or if any one of the fourth messages includes an ACK message, determining that the second data is successfully transmitted; or if each of the fourth messages includes a NACK message, determining that transmission of the second data fails, or if any one of the fourth messages includes a NACK message, determining that transmission of the second data fails; or if none of the fourth messages is received, determining that transmission of the second data fails, or if any one of the fourth messages is not received, determining that transmission of the second data fails, where the fourth message is a signaling message that is corresponding to each carrier in the second carrier set and that is sent to the network node by the second network node on each carrier.

With reference to the sixth implementation of the second aspect, in a seventh implementation of the second aspect of the present invention, the transmission module is further configured to perform at least one of the following steps:

selecting at least one carrier from the second carrier set to retransmit the second data;
performing, on the carrier corresponding to the third message or the fourth message, an operation of retransmitting the second data;
when the received fourth message corresponding to each carrier is a NACK message, starting an operation of retransmitting the second data;
when the received fourth message corresponding to any carrier is a NACK message, starting an operation of retransmitting the second data;
when the fourth messages corresponding to all carriers in the second carrier set are not received, starting an operation of retransmitting the second data; or
when the fourth message corresponding to any carrier in the second carrier set is not received, starting an operation of retransmitting the second data.

With reference to any one of the second aspect, or the first to the seventh implementations of the second aspect, in an eighth implementation of the second aspect of the present invention, after retransmitting the second data, the processing module further performs at least one of the following steps:

counting a variable Current-Transmit-Number corresponding to each carrier in the carrier set on which the second data is retransmitted, where all carriers in the carrier set are in a one-to-one correspondence with variables Current-Transmit-Number; or
counting variables Current-Transmit-Number corresponding to all carriers in the carrier set, where a previous variable Current-Transmit-Number is incremented by 1 each time after the second data is retransmitted on any carrier in the carrier set; and
the processing module further performs at least one of the following steps:

clearing a HARQ buffer when determining that a variable Current-Transmit-Number of the any carrier reaches a preset maximum value;
clearing the HARQ buffer when determining that a variable Current-Transmit-Number of each carrier in the carrier set reaches a preset maximum value; or
clearing the HARQ buffer when determining that each of the variables Current-Transmit-Number corresponding to all carriers in the carrier set reaches a preset maximum value.

With reference to any one of the fourth to the eighth implementations of the second aspect, in a ninth implementation of the second aspect of the present invention, the transmission module is specifically further configured to perform at least one of the following steps:

receiving the first data retransmitted by the second network node according to a preset third time period by using the first carrier set, where each carrier in the first carrier set is identified by a new data indicator NDI, and the NDI is used to indicate that the first data currently transmitted on a carrier is new data or retransmitted data; or

after receiving a NACK response returned by the second network node according to the NACK or receiving no NACK response within a preset time, receiving the first data retransmitted by the second network node by using the third carrier set, where each carrier in the third carrier set is identified by an NDI, the NDI is used to indicate that the first data currently transmitted on a carrier is new data or retransmitted data, and the third carrier set is a carrier set with a failure in transmitting the first data, of the first carrier set.

With reference to any one of the fourth to the ninth implementations of the second aspect, in a tenth implementation of the second aspect of the present invention, the transmission module is specifically further configured to perform at least one of the following steps:

retransmitting the second data to the second network node according to a preset fourth time period by using the second carrier set, where each carrier in the second carrier set is identified by a new data indicator NDI, and the NDI is used to indicate that the second data currently transmitted on a carrier is new data or retransmitted data; or

after determining that transmission of the second data fails, retransmitting the second data to the second network node by using a fourth carrier set, where each carrier in the eighth carrier set is identified by an NDI, the NDI is used to indicate that the fourth data currently transmitted on a carrier is new data or retransmitted data, and the fourth carrier set is an UL carrier set with a failure in transmitting the second data, of the second carrier set.

With reference to the fourth to the tenth implementations of the second aspect, in an eleventh implementation of the second aspect of the present invention, the carrier set includes a fifth carrier set that is used to send the same data and that uses a separate HARQ process, and the transmission module is specifically further configured to perform at least one of the following steps:

sending third data to the second network node by using the fifth carrier set, and after receiving a fifth message, when determining that the fifth message includes a NACK message corresponding to the fifth carrier set, determining that transmission of the third data fails, or when determining that the fifth message includes an ACK message corresponding to the fifth carrier set, determining that the third data is successfully transmitted, where the fifth message is a signaling message that is corresponding to the second carrier set and that is sent to the network node by the second network node in a preset fifth time period in any one of the following manners: any carrier in the fifth carrier set, all carriers in the fifth carrier set, a carrier preconfigured according to the RRC signaling or the MAC signaling, or a carrier for sending the DCI; or

sending the third data to the second network node by using the fifth carrier set, and after receiving sixth messages, when determining that the sixth messages include NACK messages corresponding to the fifth carrier set used to send the third data, determining that transmission of the third data fails, or when determining that the sixth messages include at least one ACK message, determining that the third data is successfully transmitted, where the sixth message is a signaling message that is corresponding to each carrier in the fifth carrier set and that is sent to the network node by the second network node on each carrier.

With reference to any one of the second aspect, or the fourth to the eleventh implementations of the second aspect, in a twelfth implementation of the second aspect of the present invention, the carrier set includes a sixth carrier set that is used to send the same data and that uses a separate HARQ process, and the transmission module is further configured to perform at least one of the following steps:

receiving fourth data by using the sixth carrier set, decoding the fourth data, and sending a seventh message to the second network node according to a third decoding result, where when the third decoding result indicates that the decoding succeeds, the seventh message includes the ACK message, or when the third decoding result indicates that the decoding fails, the seventh message includes the NACK message; and the seventh message is a signaling message sent to the second network node by the first network node in a sixth time period in any one of the following manners: any carrier in the sixth carrier set, all carriers in the sixth carrier set, a carrier preconfigured according to the RRC signaling or the MAC signaling, or an UL carrier corresponding to a DL carrier that is corresponding to the third decoding result and that is in the sixth carrier set; or

receiving the fourth data by using the sixth carrier set, decoding the fourth data, and sending an eighth message to the second network node according to a fourth decoding result, where when the fourth decoding result indicates that the decoding succeeds, the fourth message includes the ACK message, or when the fourth decoding result indicates that the decoding fails, the eighth message includes the NACK message; and the eighth message is a signaling message that is corresponding to each carrier in the sixth carrier set and that is sent to the second network node on each carrier, or a signaling message sent to the second network node on an UL carrier corresponding to a DL carrier that is corresponding to the fourth decoding result and that is in the sixth carrier set.

With reference to the eleventh or the twelfth implementation of the second aspect, in a thirteenth implementation of the second aspect of the present invention, the transmission module is further configured to perform at least one of the following steps:

retransmitting the third data to the second network node according to a preset seventh time period by using the sixth carrier set, where each carrier in the sixth carrier set is identified by a new data indicator NDI, and the NDI is used to indicate that the third data currently transmitted on a carrier is new data or retransmitted data; or
after determining that transmission of the third data fails, retransmitting the third data to the second network node by using an eighth carrier set, where each carrier in the eighth carrier set is identified by an NDI, the NDI is used to indicate that the third data currently transmitted on a carrier is new data or retransmitted data, and the eighth carrier set is a carrier set with a failure in transmitting the third data, of the sixth carrier set.

With reference to any one of the eleventh to the thirteenth implementations of the second aspect, in a fourteenth implementation of the second aspect of the present invention, the transmission module is further configured to perform at least one of the following steps:

receiving the fourth data retransmitted by the second network node according to a preset sixth time period by using the fifth carrier set, where each carrier in the fifth carrier set is identified by a new data indicator NDI, and the NDI is used to indicate that the fourth data currently transmitted on a carrier is new data or retransmitted data; or
after receiving a NACK response returned by the second network node according to the NACK or receiving no NACK response within the preset time, receiving the fourth data retransmitted by the second network node by using a seventh carrier set, where each carrier in the seventh carrier set is identified by an NDI, the NDI is used to indicate that the fourth data currently transmitted on a carrier is new data or retransmitted data, and the seventh carrier set is a carrier set with a failure in transmitting the fourth data, of the fifth carrier set.

With reference to any one of the seventh to the fourteenth implementations of the second aspect, in a fifteenth implementation of the second aspect of the present invention, the first time period, the second time period, the fifth time period, or the sixth time period is obtained according to any one of the following:

a different service type configuration;
a different data radio bearer DRB configuration;
a different carrier configuration;
a different HARQ process configuration; or
a configuration of the RRC signaling, the MAC signaling, or Packet Data Convergence Protocol PDCP signaling.

With reference to any one of the first to the fifteenth implementations of the second aspect, in a sixteenth implementation of the second aspect of the present invention, a HARQ process of each carrier is scheduled by a corresponding physical downlink control channel PDCCH, a HARQ process number and a redundancy version number that are corresponding to each carrier are indicated by the DCI, each carrier is uniquely corresponding to the PDCCH, and the DCI carries indication information of multiple carriers or indication information of the carrier set;

or,

the shared HARQ process is scheduled by a corresponding shared PDCCH, a HARQ process number and a redundancy version number that are corresponding to each DL carrier are indicated by the DCI, the shared HARQ process is uniquely corresponding to the shared PDCCH, the shared HARQ process is in a one-to-one correspondence with the carrier set, and there is at least one shared HARQ process.

With reference to any one of the second aspect, or the first to the sixteenth implementations of the second aspect, in a seventeenth implementation of the second aspect of the present invention, when the carrier set includes one carrier, the carrier includes multiple scheduling units for transmitting same data; or

when the carrier set includes more than two carriers, same data is transmitted on each carrier in the carrier set.

With reference to any one of the second aspect, or the first to the seventeenth implementations of the second aspect, in an eighteenth implementation of the second aspect of the present invention, the processing module is further configured to:

combine data transmitted by the transmission module by using each carrier set of the carrier set, to obtain the data, and decode the data; and
the transmission module is further configured to send, to the second network node according to a decoding result, a signaling message corresponding to the decoding result.

With reference to any one of the second aspect, or the first to the eighteenth implementations of the second aspect, in a nineteenth implementation of the second aspect of the present invention, when the network node is user equipment UE, the transmission module is further configured to perform one of the following steps:

receiving at least one of DL data or DL signaling by using the at least one DL carrier set; or
sending at least one of UL data or UL signaling by
using the at least one UL carrier set.

A third aspect of the present invention provides
a communications system, including:

the network node according to any one of the second
aspect, or the first to the nineteenth implementations
of the second aspect.

It can be learned from the foregoing technical
solutions that a first network node in the present invention
determines, according to at least one of a first correspondence or a second correspondence, a HARQ process and/or a HARQ entity corresponding to a carrier set,
and then receives and/or sends data and/or signaling
according to the HARQ process and/or the HARQ entity
by using the carrier set. This resolves a problem that
transmission reliability is relatively low because a second
network node cannot schedule multiple carriers simultaneously and same data cannot be effectively transmitted
on the multiple carriers.

**BRIEF DESCRIPTION OF DRAWINGS**

FIG. 1 is a schematic diagram of an embodiment of
a hybrid automatic repeat request management
method according to embodiments of the present
invention;
FIG. 2 is a schematic diagram of another embodiment of a hybrid automatic repeat request management method according to embodiments of the
present invention;
FIG. 3 is a schematic diagram of another embodiment of a hybrid automatic repeat request management method according to embodiments of the
present invention;
FIG. 4 is a schematic structural diagram of a network
node according to embodiments of the present invention; and
FIG. 5 is another schematic structural diagram of a
network node according to embodiments of the
present invention.

**DESCRIPTION OF EMBODIMENTS**

The following clearly and completely describes
the technical solutions in the embodiments of the present
invention with reference to the accompanying drawings
in the embodiments of the present invention. Apparently,
the described embodiments are merely some but not all
of the embodiments of the present invention. All other
embodiments obtained by a person skilled in the art
based on the embodiments of the present invention without creative efforts shall fall within the protection scope of the present invention.
In the specification, claims, and accompanying
drawings of the present invention, the terms "first", "second", and so on are intended to distinguish between similar objects but do not necessarily indicate a specific order
or sequence. It should be understood that the data
termed in such a way are interchangeable in proper circumstances so that the embodiments described herein
can be implemented in orders other than the order illustrated or described herein. Moreover, the terms "include",
"contain" and any other variants mean to cover the non-
exclusive inclusion, for example, a process, method, system, product, or device that includes a list of steps or
modules is not necessarily limited to those steps or modules, but may include other steps or modules not expressly listed or inherent to such a process, method, system,
product, or device. The module division in this specification is merely logical division and may be other division
in actual implementation. For example, multiple modules
may be combined or integrated into another system, or
some features may be ignored or not performed. In addition, the displayed or discussed mutual couplings or
direct couplings or communication connections may be
implemented by using some interfaces. The indirect couplings or communication connections between the modules may be implemented in electronic or other forms,
which is not limited in this specification. In addition, the
modules or submodules described as separate parts may
or may not be physically separate, may or may not be
physical modules, or may be distributed on multiple circuit modules. Some or all of the modules may be selected
according to actual needs to achieve the objectives of
the solutions of the embodiments in the present invention.
The embodiments of the present invention provide a hybrid automatic repeat request management
method, an apparatus, and a system, which are mainly
applied to an LTE network. For example, when the method, apparatus, and system are used in LTE network-
based Internet of Vehicles, a vehicle may obtain road
condition information or receive service information in
real time by means of vehicle-to-vehicle communication
(V2V, Vehicle to Vehicle) or vehicle-to-infrastructure
communication (V2I, Vehicle to Infrastructure). Alternatively, the method, apparatus, and system may be used
for device-to-device communication (D2D, Device to Device), machine-to-machine communication (M2M, Machine to Machine), or machine-to-man communication
(M2M, Machine to Man). The embodiments of the present
invention can resolve a problem in the prior art that transmission reliability is relatively low because a network
node cannot schedule multiple carriers simultaneously,
and same data cannot be effectively transmitted on the
multiple carriers.
First, it should be clear that the hybrid automatic
repeat request management method in the embodiments
of the present invention may be further applied to a military practice communications system or another similar communications system. The network node in this specification may be any wireless node device, or may be user equipment, a mobile station, a base station, or the like, and is not specifically limited in this specification. The user equipment is a smart device that moves at a high speed, may be a vehicle on land or a communications device held by a user, or may be a scout, a detector, or another similar device, and is not specifically limited in this specification.

In this specification, at least one HARQ entity is configured for each network node. The HARQ entity may maintain a given quantity of HARQ processes, each HARQ process has an identifier, the HARQ entity sends HARQ process information and a transport block (TB, Transport Block) received on a downlink synchronous channel (DL-SCH, Downlink synchronous Channel) to a corresponding HARQ process.

If it is determined that there is downlink allocation information within a TTI, a transport block received from a physical layer and corresponding HARQ information is sent to a corresponding HARQ process.

The network node sends the received transport block to a broadcast HARQ process if the network node is instructed to send the received transport block to the broadcast HARQ process.

For the received TB and corresponding HARQ information, the following processing is performed in the HARQ process.

If an NDI corresponding to the TB changes relative to previous transmission, or the TB is sent to the broadcast HARQ process and is the first received broadcast message transport block according to an instruction by scheduling information of radio resource control (RRC, Radio Resource Control) signaling, or if the TB is the first received transport block, it is regarded as a new transmission. Otherwise, it is regarded as a retransmission.

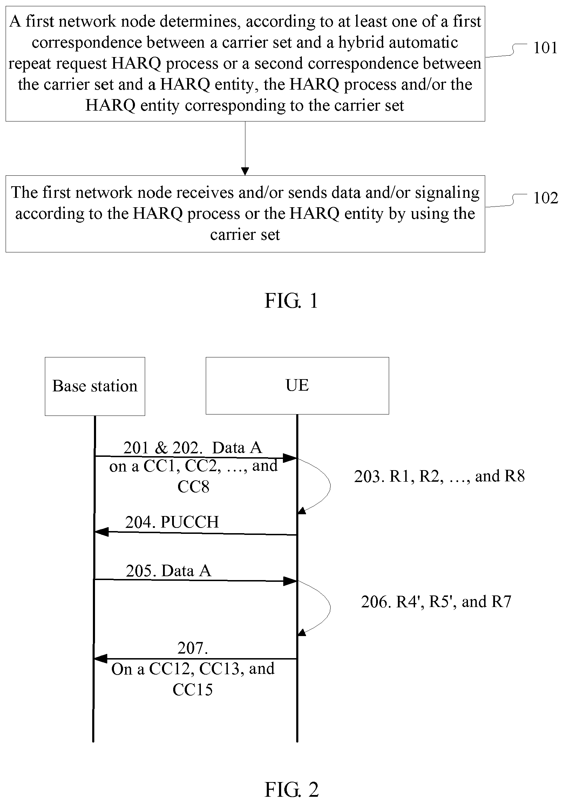

The following describes in detail a hybrid automatic repeat request management method on a user equipment side according to an embodiment of the present invention. Referring to FIG. 1, this embodiment of the present invention includes the following steps.

101. A first network node determines, according to at least one of a first correspondence between a carrier set and a hybrid automatic repeat request HARQ process or a second correspondence between the carrier set and a HARQ entity, a HARQ process and/or a HARQ entity corresponding to the carrier set.

Each HARQ process includes at least one of a HARQ process number, a HARQ process property, or other HARQ process information. The HARQ process property includes a synchronous HARQ process, an asynchronous HARQ process, a dynamic scheduling HARQ process, a semi-static scheduling HARQ process, a common HARQ process, a dedicated HARQ process, or the like.

Each HARQ entity includes at least one of a HARQ entity number, a HARQ entity property, or other HARQ entity information. The HARQ entity property includes HARQ entities whose HARQ process types are the same, HARQ entities whose HARQ process types are different, a synchronous HARQ entity, an asynchronous HARQ entity, a dynamic scheduling HARQ entity, a semi-static scheduling HARQ entity, a common HARQ entity, a dedicated HARQ entity, or the like.

The carrier set includes at least one of: at least one uplink UL carrier set or at least one downlink DL carrier set.

It can be understood that each UL carrier set includes at least one UL carrier, and each DL carrier set includes at least one DL carrier.

In an actual application, when the first network node is UE for D2D, and a second network node is a base station, the base station configures carriers for two UEs for D2D. That is, including configuring at least one of a first correspondence between a carrier set and a HARQ process or a second correspondence between the carrier set and a HARQ entity.

In the actual application, a process number ID of a HARQ process may be obtained according to a carrier number $ID_{cc}$ currently used by the first network node, a total quantity $N_1$ of carriers that share a same HARQ process, and a total quantity $N_2$ of HARQ processes configured by the second network node. A specific formula is as follows:

$$ID = [\text{floor x } (ID_{cc}/N_1)] \text{ x } N_2.$$

102. The first network node receives and/or sends data and/or signaling according to the HARQ process and/or the HARQ entity by using the carrier set.

Specifically, the first network node may receive, according to the HARQ process by using at least one carrier in the carrier set, data or signaling sent by the second network node, or may send the data or signaling by using at least one carrier in the carrier set.

In this embodiment of the present invention, a first network node determines, according to at least one of a first correspondence or a second correspondence, a HARQ process and/or a HARQ entity corresponding to a carrier set, and then receives and/or sends data and/or signaling according to the HARQ process and/or the HARQ entity by using the carrier set. This resolves a problem that transmission reliability is relatively low because a second network node cannot schedule multiple carriers simultaneously and same data cannot be effectively transmitted on the multiple carriers.

Optionally, on a basis of the embodiment corresponding to FIG. 1, in a first optional embodiment of this embodiment of the present invention, the HARQ process is further obtained according to at least one of the following correspondences: a third correspondence, a fourth correspondence, a fifth correspondence, a sixth correspondence, a seventh correspondence, an eighth correspondence, a ninth correspondence, a tenth correspondence, an eleventh correspondence, a twelfth correspondence, a thirteenth correspondence, a fourteenth correspondence, a fifteenth correspondence, a sixteenth correspondence, a seventeenth correspondence, or an eighteenth correspondence.

The third correspondence is a correspondence among at least one carrier, at least one subframe, and a HARQ process.

The fourth correspondence is a correspondence among at least one carrier, at least one subframe, a HARQ process, and a HARQ entity.

The fifth correspondence is a correspondence among at least one carrier, a data sending manner, and a HARQ process.

The sixth correspondence is a correspondence among at least one carrier, a data sending manner, a HARQ process, and a HARQ entity.

The seventh correspondence is a correspondence among at least one carrier, at least one physical resource block PRB, at least one subframe, and a HARQ process.

The eighth correspondence is a correspondence among at least one carrier, at least one PRB, at least one subframe, a HARQ process, and a HARQ entity.

The ninth correspondence is a correspondence among at least one cell index, at least one PRB identifier, at least one transmission time interval TTI number, and a HARQ process.

The tenth correspondence is a correspondence among at least one cell index, at least one PRB identifier, at least one transmission time interval TTI number, a HARQ process, and a HARQ entity.

The eleventh correspondence is a correspondence among at least one carrier, at least one subframe, a redundancy version, and a HARQ process.

The twelfth correspondence is a correspondence among at least one carrier, at least one subframe, a redundancy version, a HARQ process, and a HARQ entity.

The thirteenth correspondence is a correspondence among at least one carrier, a data sending manner, a redundancy version, and a HARQ process.

The fourteenth correspondence is a correspondence among at least one carrier, a data sending manner, a redundancy version, a HARQ process, and a HARQ entity.

The fifteenth correspondence is a correspondence among at least one carrier, at least one PRB, at least one subframe, a redundancy version, and a HARQ process.

The sixteenth correspondence is a correspondence among at least one carrier, at least one PRB, at least one subframe, a redundancy version, a HARQ process, and a HARQ entity.

The seventeenth correspondence is a correspondence among at least one cell index, an identifier of the at least one PRB, at least one transmission time interval TTI number, a redundancy version, and a HARQ process.

The eighteenth correspondence is a correspondence among at least one cell index, an identifier of the at least one PRB, at least one transmission time interval TTI number, a redundancy version, a HARQ process, and a HARQ entity.

The carrier includes an UL carrier or/and a DL carrier.

Optionally, on a basis of the embodiment corresponding to FIG. 1 or the first optional embodiment, in a second optional embodiment of this embodiment of the present invention, the HARQ entity is further obtained according to at least one of the following correspondences: a nineteenth correspondence, the fourth correspondence, a twentieth correspondence, the sixth correspondence, a twenty-first correspondence, the eighth correspondence, a twenty-second correspondence, the ninth correspondence, a twenty-third correspondence, the twelfth correspondence, a twenty-fourth correspondence, the fourteenth correspondence, a twenty-fifth correspondence, the sixteenth correspondence, a twenty-sixth correspondence, or the eighteenth correspondence.

The nineteenth correspondence is a correspondence among at least one carrier, at least one subframe, and a HARQ entity.

The fourth correspondence is a correspondence among at least one carrier, at least one subframe, a HARQ process, and a HARQ entity.

The twentieth correspondence is a correspondence among at least one carrier, a data sending manner, and a HARQ entity.

The sixth correspondence is a correspondence among at least one carrier, a data sending manner, a HARQ process, and a HARQ entity.

The twenty-first correspondence is a correspondence among at least one carrier, at least one PRB, at least one subframe, and a HARQ entity.

The eighth correspondence is a correspondence among at least one carrier, at least one PRB, at least one subframe, a HARQ process, and a HARQ entity.

The twenty-second correspondence is a correspondence among at least one cell index, at least one PRB identifier, at least one transmission time interval TTI number, and a HARQ entity.

The ninth correspondence is a correspondence among at least one cell index, at least one PRB identifier, at least one transmission time interval TTI number, a HARQ process, and a HARQ entity.

The twenty-third correspondence is a correspondence among at least one carrier, at least one subframe, a redundancy version, and a HARQ entity.

The twelfth correspondence is a correspondence among at least one carrier, at least one subframe, a redundancy version, a HARQ process, and a HARQ entity.

The twenty-fourth correspondence is a correspondence among at least one carrier, a data sending manner, a redundancy version, and a HARQ entity.

The fourteenth correspondence is a correspondence among at least one carrier, a data sending manner, a redundancy version, a HARQ process, and a HARQ entity.

The twenty-fifth correspondence is a correspondence among at least one carrier, at least one PRB, at least one subframe, a redundancy version, and a HARQ entity.

The sixteenth correspondence is a correspondence among at least one carrier, at least one PRB, at least one subframe, a redundancy version, a HARQ process, and a HARQ entity.

The twenty-sixth correspondence is a correspondence among at least one cell index, an identifier of the at least one PRB, at least one transmission time interval TTI number, a redundancy version, and a HARQ entity.

The eighteenth correspondence is a correspondence among at least one cell index, an identifier of the at least one PRB, at least one transmission time interval TTI number, a redundancy version, a HARQ process, and a HARQ entity.

The carrier includes an UL carrier or a DL carrier.

Optionally, on a basis of any one of the embodiment corresponding to FIG. 1, or the first or the second optional embodiment, in a third optional embodiment of this embodiment of the present invention, the first correspondence to the twenty-sixth correspondence are indicated by at least one of radio resource control RRC signaling, media access control control element (MAC CE, Medium Access Control Control Element) signaling, or physical downlink control channel (PDCCH, Physical Downlink Control Channel) signaling that is sent by the second network node.

For example, the RRC signaling indicates that a CC1, CC2, CC4, CC5, CC6, and CC7 share one HARQ entity m. The CC1, CC4, and CC5 share one HARQ process, and the CC2 and CC7 share one HARQ process; or the RRC signaling indicates only that a CC1, CC2, CC4, CC5, CC6, and CC7 share one HARQ entity m; or the RRC signaling indicates only that a CC1, CC2, and CC4 share one HARQ process; or the RRC signaling indicates that a CC1, CC2, CC4, CC5, CC6, and CC7 constitute a carrier set n, and indicates that the carrier set n shares a same HARQ entity and/or one HARQ process.

That the first correspondence to the twenty-sixth correspondence are indicated by physical downlink control channel PDCCH signaling includes:

a HARQ process number of each carrier in the carrier set is indicated by the PDCCH signaling, where the PDCCH signaling carries indication information used to indicate at least one carrier or indication information used to indicate the at least one carrier set.

For example, in downlink control information (DCI, Downlink Control Information), a carrier indicator (Carrier indicator) may be extended into information about a carrier group indicator (Carrier group indicator), or indication information of multiple carriers is carried. For the carrier group indicator, 0 bits or 3 bits may be still used for a carrier indicator, or a carrier indicator needs to be extended into, for example, 8 bits. For the indication information of the multiple carriers, a carrier indicator needs to be extended into, for example, 8 bits.

Optionally, the PDCCH signaling carries a HARQ process number ID (that is, HARQ process number).

Optionally, on a basis of any one of the embodiment corresponding to FIG. 1, or the first to the third optional embodiments, in a fourth optional embodiment of this embodiment of the present invention, the carrier set includes a first carrier set that shares a same HARQ process, and the receiving data and sending signaling by using the carrier set includes at least one of the following steps.

1. The first network node receives first data by using the first carrier set, decodes the first data, to obtain an overall decoding result, and sends a first message to the second network node according to a first decoding result, where when the first decoding result indicates that the decoding succeeds, the first message includes an acknowledgement ACK message, or when the first decoding result indicates that the decoding fails, the first message includes a non-acknowledgement NACK message; and the first message is a signaling message sent to the second network node by the first network node in a first time period in any one of the following manners: any carrier in the first carrier set, all carriers in the first carrier set, a carrier preconfigured according to radio resource control RRC signaling or media access control MAC signaling, or an UL carrier corresponding to a DL carrier corresponding to the first decoding result in the first carrier set.

The carrier preconfigured according to the RRC signaling or the MAC signaling may be a primary carrier, and is not specifically limited in this specification.

In this case, the first network node needs to send only the first message including the overall decoding result to the second network node. A specific process of decoding the first data and generating the first message is as follows.

(1) After receiving the first data from the first carrier set, the first network node decodes the first data transmitted on each carrier in the first carrier set, and then combines decoding results of all the carriers to obtain an overall decoding result.

Combining decoding results of all the carriers mainly includes the following situations:

a. When the first network node successfully decodes the first data received on each carrier in the first carrier set, it indicates that the decoding succeeds.

b. When the first network node successfully decodes the first data received on any carrier in the first carrier set, it indicates that the decoding succeeds.

c. When the first network node fails to decode the first data received on each carrier in the first carrier set, it indicates that the decoding fails.

d. When the first network node fails to decode the first data received on any carrier in the first carrier set, it indicates that the decoding fails.

(2) The first message is generated by using the overall decoding result, and the first network node may send the first message to the second network node only once or for multiple times. Sending the first message for multiple times can effectively avoid that a status of receiving the first data by the first network node cannot be learned because the second network node cannot correctly receive the first message sent by the first network node.

For example, in a synchronous HARQ process, because a base station receives no first message, the base station retransmits the first data repeatedly in a fixed time sequence and repeats the process again and again, wasting network resources. In an asynchronous HARQ process, the base station cannot learn a transmission status of the first data, and if transmission fails, the base station cannot perform a related retransmission operation according to the first message; consequently, the first network node cannot correctly receive the first data, and network transmission efficiency is relatively low. For a similar case in this specification, details are not repeated.

In addition, the first message is sent to the second network node on an UL carrier by using a physical uplink shared control channel (PUSCH, Physical Uplink Share Channel) according to the first time period. The first time period includes a time period n1 and a time period k1, where k1 meets at least one of the following conditions:

in frequency division duplexing (FDD, Frequency Division Duplexing), k1 = 4;
in time division duplexing (TDD, Time Division Duplexing), j is obtained according to different uplink-downlink subframe configurations; or k1 is obtained according to a service type corresponding to the data, and k1 is corresponding to the service type, for example, in V2V communication, for a service whose delay is relatively high, k1 = 2; or
k1 is set by using RRC or MAC.

Scheduling information is sent on the PUSCH on an UL carrier corresponding to a DL carrier for sending PDCCH scheduling, or a carrier used to send scheduling information on the PUSCH may be configured by using RRC or MAC.

2. The first network node receives the first data by using the first carrier set, decodes the first data corresponding to each carrier in the first carrier set, and sends multiple second messages to the second network node according to second decoding results, where when the second decoding result indicates that the decoding succeeds, the second message includes the ACK message, or when the second decoding result indicates that the decoding fails, the second message includes the NACK message; and the second message is a signaling message that is corresponding to each carrier in the first carrier set and that is sent to the second network node by the first network node on each carrier, or a signaling message sent to the second network node on an UL carrier corresponding to a DL carrier that is corresponding to the second decoding result and that is in the first carrier set.

In this case, the first network node needs to send, to the second network node, a second message corresponding to a decoding result corresponding to each carrier. A specific process of decoding the first data and generating a second message is as follows:

(1) After receiving the first data from the first carrier set, the first network node decodes the first data transmitted on each carrier in the first carrier set, and obtains a respective decoding result.

(2) The respective second message corresponding to each carrier is generated according to the respective decoding result, that is, each second message independently indicates a status of transmitting the first data on a corresponding carrier. The first network node separately sends the second messages to the second network node. The second message corresponding to each carrier may be sent only once, or may be sent for multiple times.

It can be understood that there may be multiple shared HARQ processes, and each shared HARQ process may be shared by multiple carriers.

Both the first message and the second message are signaling messages used for the first network node to feed back, to the second network node after receiving the first data sent by the second network node, a transmission result of transmitting the first data on each carrier. In this case, after determining that the first message or the second message is NACK, the second network node schedules a downlink resource and schedules a transmission manner of retransmitting the first data.

Several carriers that share one HARQ process may be scheduled by a common PDCCH. Optionally, a HARQ process number (HARQ process number) is indicated by DCI information, and a redundancy version number may be bound with a carrier; or a HARQ process of each carrier is scheduled by an independent PDCCH. Optionally, a HARQ process number ID and a redundancy version number may be indicated by DCI information, or a carrier and a redundancy version number may be bound.

In this optional embodiment, both the synchronous HARQ process and the asynchronous HARQ process are used. In this case, the asynchronous HARQ process may effectively avoid a performance loss caused by resource allocation conflict during retransmission. For example, in the HARQ process, a process with a relatively high priority needs to be scheduled, but a resource at this time has been allocated to another HARQ process. In this case, because retransmission does not start in a fixed time sequence in the asynchronous HARQ process, the use of the asynchronous HARQ process can effectively avoid conflict caused by resource allocation.

Optionally, on a basis of the fourth optional embodiment, in a fifth optional embodiment of this embodiment of the present invention, when the first network node sends the first message including the overall decoding result to the second network node, the first message for the second network node meets at least one of the following conditions:

> when the first network node successfully decodes the first data received on each carrier in the first carrier set, the first message includes the ACK message, that is, when the first data received on all carriers in the first carrier set is successfully decoded, it is determined that the first data is transmitted successfully at this time by using the first carrier set; in this case, the first message including an ACK message is generated at a physical layer, and similar content is not described in the following;
> when the first network node successfully decodes the first data received on any carrier in the first carrier set, the first message includes the ACK message, that is, provided that the first data is successfully received on any carrier, it is determined that the first data is successfully transmitted at this time by using the first carrier set;
> when the first network node fails to decode the first data received on each carrier in the first carrier set, the first message includes the NACK message, that is, when the first data fails to be received on all the carriers, it is determined that transmission of the first data by using the first carrier set fails this time, and the first network node discards the first data; or
> when the first network node fails to decode the first data received on any carrier in the first carrier set, the first message includes the NACK message, that is, provided that the first data fails to be received on any carrier, it is determined that transmission of the first data by using the first carrier set fails this time, and the first network node discards the first data.

In an actual application, the first network node generally uses CRC check code to detect whether received data fails to be received. If the reception fails, data that fails to be received is stored in a HARQ buffer, so that retransmitted data and the data stored in the HARQ buffer are combined after the retransmitted data is received subsequently, to obtain data that is more reliable than that obtained in independent decoding; then, the combined data is decoded, and whether a NACK message needs to be sent is determined according to a decoding result.

Optionally, on a basis of any one of the embodiment corresponding to FIG. 1, or the first to the fifth optional embodiments, in a sixth optional embodiment of this embodiment of the present invention, the carrier set includes a second carrier set that shares a same HARQ process, and the sending data and receiving signaling by using the carrier set includes at least one of the following steps.

1. The first network node sends second data to the second network node by using the second carrier set, and after receiving a third message, when determining that the third message includes a NACK message corresponding to the second carrier set, determines that transmission of the second data fails, or when determining that the third message includes an ACK message corresponding to the second carrier set, determines that the second data is successfully transmitted, where the third message is a signaling message that is corresponding to the second carrier set and that is sent to the first network node by the second network node in a preset second time period in any one of the following manners: any carrier in the second carrier set, all carriers in the second carrier set, a carrier preconfigured according to the RRC signaling or the MAC signaling, or a carrier for sending DCI.

In this case, the third message is a signaling message that includes an overall decoding result, and details are as follows:

(1) After receiving the second data from the first network node, the second network node decodes the second data transmitted on all carriers in the second carrier set, and performs a logical AND operation on decoding results of all the carriers, that is, combines the decoding results to obtain an overall decoding result.

(2) After generating the third message according to the overall decoding result, the second network node may send the third message to the first network node only once or for multiple times. Sending the third message for multiple times can effectively avoid that a status of receiving second data by the second network node cannot be learned because the first network node cannot correctly receive the third message sent by the second network node.

In addition, the third message is sent to the first network node by the second network node on a physical hybrid automatic repeat indication channel (PHICH, Physical Hybrid Automatic Repeat Request Indication Channel) on a DL carrier according to a second time period. The second time period includes a time period n2 and a time period k2, where k2 meets at least one of the following conditions:

> in FDD, k2 = 4;
> in TDD, j is obtained according to different uplink-downlink subframe configurations; or k2 is obtained according to a service type corresponding to the data, and k2 is corresponding to the service type, for example, in V2V communication, for a service whose delay is relatively high, k2 = 2; or k2 is set by using RRC or MAC.

Scheduling information is sent on the PHICH on a carrier for sending PDCCH scheduling, or a carrier used to send scheduling information on the PHICH may be configured by using RRC or MAC. This is not specifically limited.

2. The first network node sends the second data to the second network node by using the second carrier set; and after receiving fourth messages, if each of the fourth messages includes an ACK message, determines that the second data is successfully transmitted, or if any one of the fourth messages includes an ACK message, determines that the second data is successfully transmitted; or if each of the fourth messages includes a NACK message, determines that transmission of the second data fails, or if any one of the fourth messages includes a NACK message, determines that transmission of the second data fails; or if none of the fourth messages is received, determines that transmission of the second data fails, or if any one of the fourth messages is not received, determines that transmission of the second data fails, where the fourth message is a signaling message that is corresponding to each carrier in the second carrier set and that is sent to the first network node by the second network node on each carrier.

Optionally, on a basis of the sixth optional embodiment, in a seventh optional embodiment of this embodiment of the present invention, in several cases of retransmitting the second data by the first network node, after the sending, by the first network node, second data to the second network node by using the second carrier set, the sending, by the first network node, data by using the carrier set specifically includes at least one of the following:

selecting, by the first network node, at least one carrier from the second carrier set to retransmit the second data;

performing, by the first network node on the carrier corresponding to the third message or the fourth message, an operation of retransmitting the second data;

when the fourth message that is corresponding to each carrier and that is received by the first network node is a NACK message, starting an operation of retransmitting the second data;

when the fourth message that is corresponding to any carrier and that is received by the first network node is a NACK message, starting an operation of retransmitting the second data;

when the first network node does not receive the fourth messages corresponding to all carriers in the second carrier set, starting an operation of retransmitting the second data; or
when the first network node does not receive the fourth message corresponding to any carrier in the second carrier set, starting an operation of retransmitting the second data.

Optionally, on a basis of any one of the embodiment corresponding to FIG. 1, or the first to the seventh optional embodiments, in an eighth optional embodiment of this embodiment of the present invention, when the first/second network node is a first network node, the first network node may further maintain a variable Current-Transmit-Number

**[0146]** (Current-TX-NB, Current-Transmit-Number) after transmitting data. Specifically, after the second data is retransmitted, the method further includes one of the following steps.

1. The first network node counts a variable Current-Transmit-Number corresponding to each carrier used to retransmit the second data in the carrier set, where all carriers in the carrier set are in a one-to-one correspondence with the variables Current-Transmit-Number.

The first network node maintains a variable Current-Transmit-Number Current-TX-NB-CCn (n is a natural number corresponding to a carrier) corresponding to each carrier in the carrier set. A previous variable Current-Transmit-Number is incremented by 1 each time after the first network node retransmits the second data on any carrier in the carrier set. Details are as follows:

(1) When the HARQ process is established, the variable Current-Transmit-Number is initialized to 0. For example, Current-TX-NB-CC1: 0, Current-TX-NB-CC2: 0; Current-TX-NB-CC3: 0.

(2) When the HARQ entity requests to perform retransmission on the $n^{th}$ carrier, a variable Current-Transmit-Number corresponding to the carrier n on which retransmission is performed is incremented by 1: Current-TX-NB-CCn+1. For example, or:

2. The first network node counts variables Current-Transmit-Number corresponding to all carriers in the carrier set, that is, for the carrier set, one variable Current-Transmit-Number is maintained:

(1) When the HARQ process is established, a variable Current-Transmit-Number corresponding to each carrier is initialized to 0.

(2) When the HARQ entity requests one retransmission, a variable Current-Transmit-Number corresponding to a carrier for retransmission is incremented by 1: Current-TX-NB+1.

A variable Current-Transmit-Number is incremented by 1 each time after the first network node retransmits the second data by using any carrier in the carrier set.

The first network node further performs at least one of the following steps:

clearing, by the first network node, a HARQ buffer when determining that a variable Current-Transmit-Number of the any carrier reaches a preset maximum value;

clearing, by the first network node, a HARQ buffer when determining that a variable Current-Transmit-Number of each carrier in the carrier set reaches a preset maximum value; or

clearing the HARQ buffer when determining that each of the variables Current-Transmit-Number corresponding to all carriers in the carrier set reaches a preset maximum value.

In an actual application, the first network node or second network node may be a wireless node device such as a base station, or may be UE. In the foregoing eighth optional embodiment, generally, Current-TX-NB may be for UE, or may be for a wireless node device such as a base station. A specific application scenario is not limited in this specification.

Optionally, on a basis of the fifth to the eighth optional embodiments, in a ninth optional embodiment of this embodiment of the present invention, in a case of receiving, by the first network node, the first data retransmitted by the second network node, after the sending a first message to the second network node according to a first decoding result, or after the sending second messages to the second network node according to a second decoding result, the receiving data by using the carrier set specifically further includes at least one of the following steps.

1. The first network node receives the first data retransmitted by the second network node according to a preset third time period by using the first carrier set. Optionally, each carrier in the first carrier set is identified by a new data indicator NDI, and the NDI is used to indicate that the first data currently transmitted on a carrier is new data or retransmitted data.

Optionally, regardless of whether the first network node fails to receive the first data, the second network node retransmits the first data in a fixed time sequence, that is, in a third time period, so as to ensure that the first network node can correctly receive the first data. This effectively improves data transmission efficiency, particularly when important data is transmitted. Generally, the third time period includes a time period n3 and a time period j1, where j1 meets at least one of the following conditions:

in FDD, j1 = 8;
in TDD, j1 is obtained according to different uplink-downlink subframe configurations; or j1 is obtained according to a service type corresponding to the data, and j1 is corresponding to the service type, for example, in V2V communication, for a service whose delay is relatively high, j1 = 6; or
j 1 is set by using RRC signaling or MAC signaling.

A carrier for retransmission may be a carrier on which previous transmission fails, or may be a carrier configured according to PDCCH scheduling information or MAC signaling.

2. After receiving a NACK response returned by the second network node according to the NACK or receiving no NACK response within a preset time, the first network node receives the first data retransmitted by the second network node by using the third carrier set. Optionally, each carrier in the third carrier set is identified by an NDI, the NDI is used to indicate that the first data currently transmitted on a carrier is new data or retransmitted data, and the third carrier set is a carrier set with a failure in transmitting the first data, in the first carrier set.

In this case, the first data may be retransmitted in the foregoing fixed time sequence n4+j2 (that is, in a synchronous HARQ process), where j2 meets at least one of the following conditions:

in FDD, j2 = 8;
in TDD, j2 is obtained according to different uplink-downlink subframe configurations; or j2 is obtained according to a service type corresponding to the data, and j2 is corresponding to the service type; or
in V2V, for a service whose delay is relatively high, j2 = 6, where
j2 is set by using RRC signaling and MAC signaling, and a specific retransmission triggering condition or time is not limited in this specification.

A redundancy version (RV, Redundancy version) of each retransmission channel code is predefined and does not require support of additional signaling. When the RV is designed, because a channel code rate for downlink HARQ retransmission has been determined, not all MCSs are selected, but a modulation scheme may still be selected. When a modulation scheme changes, a quantity of resource blocks (RB, Resource Block) may correspondingly change. Therefore, the quantity of resource blocks needs to be indicated to the first network node by using a downlink signaling resource.

Optionally, on a basis of the fifth to the ninth optional embodiments, in a tenth optional embodiment of this embodiment of the present invention, the first network node retransmits the second data. After the sending, by the first network node, second data to the second network node by using the second carrier set, the sending data by using the carrier set specifically includes at least one of the following:

1. The first network node retransmits the second data to the second network node according to a preset fourth time period by using the second carrier set. Optionally, each carrier in the second carrier set is identified by a new data indicator NDI, and the NDI is used to indicate that the second data currently transmitted on a carrier is new data or retransmitted data.

The fourth time period includes a time period n5 and a time period j3, where j3 meets at least one of the following conditions:

in FDD, j3 = 8;
in TDD, j3 is obtained according to different uplink-downlink subframe configurations; or j3 is obtained according to a service type corresponding to the data, and j3 is corresponding to the service type, for example, in V2V communication, for a service whose delay is relatively high, j3 = 6; or
j3 is set by using RRC signaling or MAC signaling.

A carrier for retransmission may be a carrier on which previous transmission fails, or may be a carrier configured according to PDCCH scheduling information or MAC signaling.

2. After determining that transmission of the second data fails, the first network node retransmits the second data to the second network node by using a fourth carrier set. Optionally, each carrier in the eighth carrier set is identified by an NDI, the NDI is used to indicate that the fourth data currently transmitted on a carrier is new data or retransmitted data, and the fourth carrier set is an UL carrier set with a failure in transmitting the second data, of the second carrier set.

In this case, referring to the second case in the ninth optional embodiment, when the first network node retransmits the second data, retransmission may be performed in a preset fixed time sequence n4+j2, and a specific retransmission triggering condition or time is not limited in this specification.

Optionally, on a basis of any one of the embodiment corresponding to FIG. 1, or the first to the tenth optional embodiments, in an eleventh optional embodiment of this embodiment of the present invention, the carrier set includes a fifth carrier set that is used to send same data and that uses a separate HARQ process, and the receiving signaling and sending data by using the carrier set specifically includes at least one of the following steps:

sending, by the first network node, third data to the second network node by using the fifth carrier set, and after receiving a fifth message, when determining that the fifth message includes a NACK message corresponding to the fifth carrier set, determining that transmission of the third data fails, or when determining that the fifth message includes an ACK message corresponding to the fifth carrier set, determining that the third data is successfully transmitted, where the fifth message is a signaling message that is corresponding to the second carrier set and that is sent to the first network node by the second network node in a preset fifth time period in any one of the following manners: any carrier in the fifth carrier set, all carriers in the fifth carrier set, a carrier preconfigured according to the RRC signaling or the MAC signaling, or a carrier for sending the DCI; or sending, by the first network node, the third data to the second network node by using the fifth carrier set, and after receiving sixth messages, when determining that the sixth messages include NACK messages corresponding to the fifth carrier set used to send the third data, determining that transmission of the third data fails, or when determining that the sixth messages include at least one ACK message, determining that the third data is successfully transmitted, where the sixth message is a signaling message that is corresponding to each carrier in the fifth carrier set and that is sent to the first network node by the second network node on each carrier.

A configuration manner of the fifth time period is the same as that of the first time period in the fourth optional embodiment, and for details, reference may be made to the fourth optional embodiment. Similar content is not repeated.

Content and a sending manner of the fifth message and the sixth message in this optional embodiment are similar to those in the seventh optional embodiment, and details are not repeated.

Optionally, on a basis of any one of the embodiment corresponding to FIG. 1, or the first to the eleventh optional embodiments, in a twelfth optional embodiment of this embodiment of the present invention, the carrier set includes a sixth carrier set that is used to send the same data and that uses a separate HARQ process, the same data are sent on each carrier in the sixth carrier set, each carrier set uses a separate HARQ process, and the receiving data and sending signaling by using the carrier set includes at least one of the following steps.

1. The first network node receives fourth data by using the sixth carrier set, decodes the fourth data, and sends a seventh message to the second network node according to a third decoding result, where when the third decoding result indicates that the decoding succeeds, the seventh message includes the ACK message, or when the third decoding result indicates that the decoding fails, the seventh message includes the NACK message; and the seventh message is a signaling message sent to the second network node by the first network node in a sixth time period in any one of the following manners: any carrier in the sixth carrier set, all carriers in the sixth carrier set, a carrier preconfigured according to the RRC signaling or the MAC signaling, or an UL carrier corresponding to a DL carrier that is corresponding to the third decoding result and that is in the sixth carrier set.

A configuration manner of the sixth time period is the same as that of the second time period in the seventh optional embodiment, and for details, reference may be made to the seventh optional embodiment. Similar content is not repeated.

In this case, the first network node needs to send only a seventh message including an overall decoding result to the second network node. For a specific process of decoding the fourth data, reference is made to the process of generating the first message in the fourth optional embodiment, and details are not repeated in this specification.

2. The first network node receives the fourth data by using the sixth carrier set, decodes the fourth data, and sends an eighth message to the second network node according to a fourth decoding result, where when the fourth decoding result indicates that the decoding succeeds, the fourth message includes the ACK message, or when the fourth decoding result indicates that the decoding fails, the eighth message includes the NACK message; and the eighth message is a signaling message that is corresponding to each carrier in the sixth carrier set and that is sent to the second network node by the first network node on each carrier, or a signaling message sent to the second network node on an UL carrier corresponding to a DL carrier that is corresponding to the fourth decoding result and that is in the sixth carrier set.

In this case, the first network node needs to send, to the second network node, an eighth message corresponding to a decoding result corresponding to each carrier. For a specific process of decoding the fourth data, reference is made to the process of generating the second message in the fourth optional embodiment, and details are not repeated in this specification.

For the sixth carrier set for sending the same data, each carrier set of the sixth carrier set uses a separate HARQ process. For example, a CC1, CC2, and CC4 are configured in RRC to send same data, and each CC maintains one CURRENT_TX_NB-CCn.

Optionally, on a basis of the eleventh or twelfth optional embodiment, in a thirteenth optional embodiment of this embodiment of the present invention, after the sending a seventh message to the second network node according to a third decoding result, or after the sending an eighth message to the second network node according to a fourth decoding result, the receiving data by using the carrier set specifically further includes at least one of the following steps:

> retransmitting, by the first network node, the third data to the second network node according to a preset seventh time period by using the sixth carrier set, where optionally, each carrier in the sixth carrier set is identified by a new data indicator NDI, and the NDI is used to indicate that the third data currently transmitted on a carrier is new data or retransmitted data; and
> in this case, a configuration manner of the seventh time period is the same as that of the fourth time period in the tenth optional embodiment, and for details, reference may be made to the tenth optional embodiment, and similar content is not repeated; or after determining that transmission of the third data fails, retransmitting, by the first network node, the third data to the second network node by using an eighth carrier set, where optionally, each carrier in the eighth carrier set is identified by an NDI, the NDI is used to indicate that the third data currently transmitted on a carrier is new data or retransmitted data, and the eighth carrier set is a carrier set with a failure in transmitting the third data, of the sixth carrier set; and

in this case, referring to the second case of the ninth optional embodiment, when the first network node retransmits the third data, retransmission may be performed in a preset fixed time sequence n4+j2, and a specific retransmission triggering condition or time is not limited in this specification.

Optionally, on a basis of the eleventh to thirteenth optional embodiments, in a fourteenth optional embodiment of this embodiment of the present invention, after the determining that transmission of the third data fails, the sending data by using the carrier set specifically further includes at least one of the following steps.

1. The first network node receives the fourth data retransmitted by the second network node according to a preset sixth time period by using the fifth carrier set. Optionally, each carrier in the fifth carrier set is identified by a new data indicator NDI, and the NDI is used to indicate that the fourth data currently transmitted on a carrier is new data or retransmitted data.

In this case, a configuration manner of the sixth time period is the same as that of the third time period in the ninth optional embodiment, and for details, reference may be made to the ninth optional embodiment. Similar content is not repeated.

When the fourth data is DL data, and the HARQ process is a synchronous non-adaptive HARQ process, and after transmission fails, the fourth data is retransmitted in the sixth time period. The first network node has learned of the retransmission time point and does not require additional signaling overheads to identify a current HARQ process number, and the number is obtained from a subframe number.

2. After receiving a NACK response returned by the second network node according to the NACK or receiving no NACK response within the preset time, the first network node receives the fourth data retransmitted by the second network node by using a seventh carrier set. Optionally, each carrier in the seventh carrier set is identified by an NDI, the NDI is used to indicate that the fourth data currently transmitted on a carrier is new data or retransmitted data, and the seventh carrier set is a carrier set with a failure in transmitting the fourth data, of the fifth carrier set.

In this case, referring to the second case of the ninth optional embodiment, the fourth data may be retransmitted in the fixed time sequence n4+j2, and a specific retransmission triggering condition or time is not limited in this specification.

Optionally, on a basis of the seventh to the fourteenth optional embodiments, in a fifteenth optional embodiment of this embodiment of the present invention, the first time period, the second time period, the fifth time period, or the sixth time period is obtained according to any one of the following:

a different service type configuration;
a different data radio bearer DRB configuration;
a different carrier configuration;
a different HARQ process configuration; or
configuring signaling by using the RRC signaling, the MAC signaling, or the Packet Data Convergence Protocol (PDCP, Packet Data Convergence Protocol).

Optionally, on a basis of the first to the fifteenth optional embodiments, in a sixteenth optional embodiment of this embodiment of the present invention, a HARQ process of each carrier is scheduled by a corresponding physical downlink control channel PDCCH, a HARQ process number and a redundancy version number that are corresponding to each carrier are indicated by the DCI, each carrier is uniquely corresponding to the PDCCH, and the DCI carries indication information of multiple carriers or indication information of the carrier set;
or,
the shared HARQ process is scheduled by a corresponding shared PDCCH, a HARQ process number and a redundancy version number that are corresponding to each DL carrier are indicated by the DCI, the shared HARQ process is uniquely corresponding to the shared PDCCH, the shared HARQ process is in a one-to-one correspondence with the carrier set, and there is at least one shared HARQ process.

Optionally, on a basis of the first to the sixteenth optional embodiments, in a seventeenth optional embodiment of this embodiment of the present invention, when the carrier set includes one carrier, the carrier includes multiple scheduling units for transmitting same data; or when the carrier set includes more than two carriers, same data is transmitted on each carrier in the carrier set.

In TDD, each carrier has both an uplink transmission function and a downlink transmission function. Uplink transmission and downlink transmission are performed on a same frequency, and data is transmitted in a crosswise way according to time allocation, that is, uplink transmission and downlink transmission are performed on a same CC but in different timeslots.

In FDD, each carrier is unidirectional. That is, each carrier either has only an uplink transmission function, or has only a downlink transmission function. In other words, data may be transmitted simultaneously in different time periods.

Optionally, on a basis of any one of the first to the seventeenth optional embodiments, in an eighteenth optional embodiment of this embodiment of the present invention, after the receiving, by the first network node, data by using the carrier set, the method further includes:

combining, by the first network node, data transmitted by using each carrier set of the carrier set, to obtain the data, decoding the data, and sending, to the second network node according to a decoding result, a signaling message corresponding to the decoding result.

Optionally, on a basis of the first to the eighteenth optional embodiments, in a nineteenth optional embodiment of this embodiment of the present invention, when the first network node is user equipment UE, the receiving and/or sending, by the first network node, data and/or signaling by using the carrier set specifically includes one of the following steps:

receiving, by the UE, at least one of DL data or DL signaling by using the at least one DL carrier set; or
sending, by the UE, at least one of UL data or UL signaling by using the at least one UL carrier set.

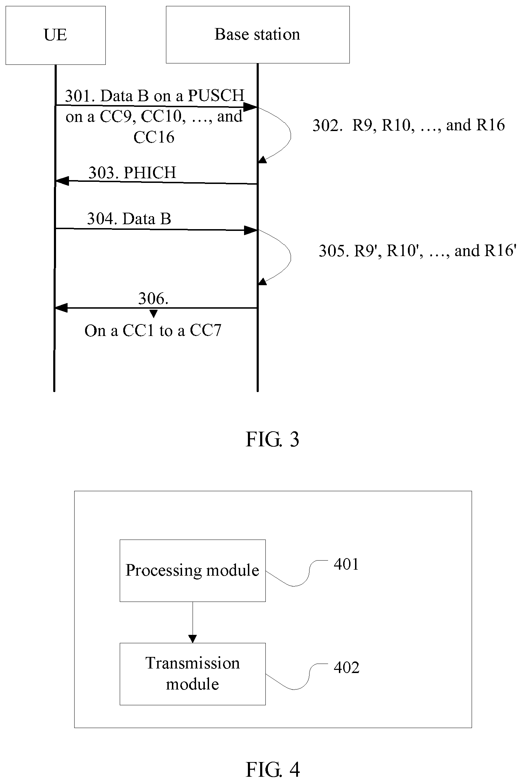

Referring to FIG. 2 and FIG. 3, for ease of understanding, the following uses a specific application scenario to describe in detail a hybrid automatic repeat request management method in the embodiments of the present invention. A process of signaling interaction between UE and a base station is described in detail by using an example in which a first network node is the UE and a second network node is the base station. The UE currently uses one DL carrier set and one UL carrier set, the DL carrier set shares a HARQ process 1, the UL carrier set shares a HARQ process 2, the DL carrier set includes multiple DL carriers (that is, a CC1, CC2, ..., and CC8), the UL carrier set includes multiple UL carriers (that is, a CC9, CC10, ..., and CC16), and each DL carrier is corresponding to a unique UL carrier, for example, the CC1 is corresponding to the CC9, the CC2 is corresponding to the CC10, ..., and the CC8 is corresponding to the CC16. As shown in FIG. 2, a process of transmitting DL data by using a carrier set in an embodiment of the present invention includes the following steps.

201. A base station sends data A to UE at a time point n = 0 on a CC1, CC2, ..., and CC8.

202. The UE receives the data A on the CC1, CC2, ..., and CC8.

203. The UE decodes the data A on the CC1, CC2, ..., and CC8, to obtain decoding results R1, R2, ..., and R8 respectively.

If the decoding succeeds, 1 is used to indicate the decoding result, and if the decoding fails, 0 is used to indicate the decoding result. Specific decoding results are shown in the following table:

| $CC_n$ | $R_n$ |
|--------|-------|
| $CC_1$ | 1 |
| $CC_2$ | 1 |
| $CC_3$ | 1 |

(continued)

| | |
|---|---|
| $CC_4$ | 0 |
| $CC_5$ | 1 |
| $CC_6$ | 0 |
| $CC_7$ | 0 |
| $CC_8$ | 1 |

It can be learned from this table that data transmission fails on the CC4, CC6, and CC7.

204. The UE generates corresponding notification messages respectively according to decoding results corresponding to the CC1 to the CC8, and sends the notification messages to the base station at a time point n = 4 on a PUCCH on the CC9 to the CC16 respectively.

For example, each of notification messages corresponding to the CC1 to the CC3 and the CC5 to the CC8 is an ACK message, and each of notification messages corresponding to the CC4, CC5, and CC7 is a NACK message.

The notification message corresponding to the CC1 is sent to the base station on the CC9, the notification message corresponding to the CC2 is sent to the base station on the CC10, ..., and the notification message corresponding to the CC8 is sent to the base station on the CC16.

205. After identifying the CC4, CC5, and CC7 by using NDIs, the base station retransmits the data A to the UE at a time point n = 6 on a PDSCH on the CC4, CC5, and CC7 separately.

206. After receiving, on the CC4, CC5, and CC7, the data A retransmitted by the base station, the UE decodes the data A received on the CC4, CC5, and CC7, to obtain decoding results R4', R5', and R7' respectively.

Each of the R4', R5', and R7' is 1.

207. The UE generates corresponding notification messages respectively according to decoding results corresponding to the CC4, CC5, and CC7, and sends the notification messages to the base station at a time point n+10 on the CC12, CC13, and CC15 respectively.

Each of the notification messages corresponding to the CC4, CC5, and CC7 is an ACK message.

The notification message corresponding to the CC4 is sent to the base station on the CC12, the notification message corresponding to the CC5 is sent to the base station on the CC13, and the notification message corresponding to the CC7 is sent to the base station on the CC15.

As shown in FIG. 3, a process of transmitting UL data by using a carrier set in an embodiment of the present invention includes the following steps.

301. UE sends data B to a base station at a time point n = 4 on a PUSCH on a CC9, CC10, ..., and CC16.

302. After receiving the data B on the CC9, CC10, ..., and CC16, the base station decodes the data B on the CC9, CC10, ..., and CC16 to obtain decoding results R9, R10, ..., and R16 respectively.

Specific decoding results are shown in the following table:

| $CC_n$ | $R_n$ |
|---|---|
| $CC_9$ | 0 |
| $CC_{10}$ | 1 |
| $CC_{11}$ | 1 |
| $CC_{12}$ | 1 |
| $CC_{13}$ | 1 |
| $CC_{14}$ | 1 |
| $CC_{15}$ | 1 |
| $CC_{16}$ | 1 |

It can be learned from this table, transmission of the data B fails on the CC9.

303. The base station performs a logical AND operation on the decoding results corresponding to the CC9 to the CC16, to obtain an overall decoding result, then generates a corresponding notification message according to the overall decoding result, and sends the notification message to the base station at a time point n = 8 on a PHICH by using any one of the CC9 to the CC16, where the notification message includes a NACK message.

304. The UE retransmits the data B to the base station at a time point n = 12 on the PUSCH on the CC9 to the CC16.

305. After receiving the data B retransmitted by the UE on the CC9 to the CC16, the base station decodes the data B retransmitted on the CC9 to the CC16, to obtain R9', R10', ..., and R16' respectively.

Each of the R9', R10', ..., and R16' is 1.

306. The base station generates corresponding notification messages according to the R9', R10', ..., and R16' respectively, and sends these notification messages to the UE on a CC1 to a CC7 respectively.

The notification messages corresponding to the CC9 and CC10 are both ACK messages.

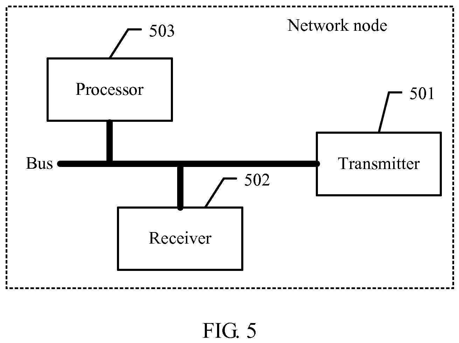

Referring to FIG. 4 and FIG. 5, the following describes in detail a network node in the present invention. In addition, the present invention further provides a computer storage medium. The medium stores a program. During execution, the program includes some or all steps in the hybrid automatic repeat request management method executed by the foregoing user equipment, network node, or base station.

FIG. 4 is a schematic structural diagram of a virtual network node according to an embodiment of the present invention.

FIG. 5 is another schematic structural diagram of a network node 50 according to an embodiment of the present invention. The network node 90 may include at least one network interface or another communications interface, at least one receiver 501, at least one transmitter 502, at least one processor 503, and a memory 504, so as to implement a connection and communication between these apparatuses. The at least one network interface (which may be wired or wireless) is used to implement a communications connection between the system gateway and at least one another network element. The Internet, a wide area network, a local area network, a metropolitan area network, or the like may be used.

The memory 504 may include a read-only memory and a random access memory, and provide an instruction and data to the processor 503. A part of the memory 504 may further include a high-speed random access memory (RAM, Random Access Memory), or may further include a non-volatile memory (non-volatile memory).

The memory 904 stores the following elements: an executable module or a data structure, or a subset thereof, or an extended set thereof:

Operation instructions: include various operation instructions, and are used to implement various operations.

An operating system: includes various system programs, and is used to implement various basic services and process hardware-based tasks.

In this embodiment of the present invention, the processor 503 invokes an operation instruction (the operation instruction may be stored in the operating system) stored in the memory 504, to perform an operation of the processing module 401 in this embodiment of the present invention. The receiver 501 and the transmitter 502 can complete an operation performed by the transmission module 402.

This embodiment of the present invention includes:

a processing module 401, configured to determine, according to at least one of a first correspondence between a carrier set and a hybrid automatic repeat request HARQ process or a second correspondence between the carrier set and a HARQ entity, a HARQ process and/or a HARQ entity corresponding to the carrier set, where the carrier set includes at least one of: at least one uplink UL carrier set or at least one downlink DL carrier set; and
a transmission module 402, configured to receive and/or send data and/or signaling according to the HARQ process and/or the HARQ entity by using the carrier set.

The processing module may be a processor 503. The transmission module includes a receiver 501 and a transmitter 502. The network node may receive data and/or signaling by using the receiver 501, and sends data and/or signaling by using the transmitter 502. Both the data and the signaling are used in this specification.

In this embodiment of the present invention, a processing module 401 determines, according to at least one of a first correspondence or a second correspondence, a HARQ process and/or a HARQ entity corresponding to a carrier set. A transmission module 402 receives and/or sends data and/or signaling according to the HARQ process and/or the HARQ entity by using the carrier set. This resolves a problem that transmission reliability is relatively low because a second network node cannot schedule multiple carriers simultaneously and same data cannot be effectively transmitted on the multiple carriers.

Optionally, on a basis of the embodiment corresponding to FIG. 4, in a first optional embodiment of this embodiment of the present invention, the HARQ process is further obtained according to at least one of the following correspondences: a third correspondence, a fourth correspondence, a fifth correspondence, a sixth correspondence, a seventh correspondence, an eighth correspondence, a ninth correspondence, a tenth correspondence, an eleventh correspondence, a twelfth correspondence, a thirteenth correspondence, a fourteenth correspondence, a fifteenth correspondence, a sixteenth correspondence, a seventeenth correspondence, and an eighteenth correspondence.

The third correspondence is a correspondence among at least one carrier, at least one subframe, and a HARQ process.

The fourth correspondence is a correspondence among at least one carrier, at least one subframe, a HARQ process, and a HARQ entity.

The fifth correspondence is a correspondence among at least one carrier, a data sending manner, and a HARQ process.

The sixth correspondence is a correspondence among at least one carrier, a data sending manner, a HARQ process, and a HARQ entity.

The seventh correspondence is a correspondence among at least one carrier, at least one physical resource block PRB, at least one subframe, and a HARQ process.

The eighth correspondence is a correspondence among at least one carrier, at least one PRB, at least one subframe, a HARQ process, and a HARQ entity.

The ninth correspondence is a correspondence among at least one cell index, at least one PRB identifier, at least one transmission time interval TTI number, and a HARQ process.

The tenth correspondence is a correspondence among at least one cell index, at least one PRB identifier, at least one transmission time interval TTI number, a HARQ process, and a HARQ entity.

The eleventh correspondence is a correspondence among at least one carrier, at least one subframe, a redundancy version, and a HARQ process.

The twelfth correspondence is a correspondence among at least one carrier, at least one subframe, a redundancy version, a HARQ process, and a HARQ entity.

The thirteenth correspondence is a correspondence among at least one carrier, a data sending manner, a redundancy version, and a HARQ process.

The fourteenth correspondence is a correspondence among at least one carrier, a data sending manner, a redundancy version, a HARQ process, and a HARQ entity.

The fifteenth correspondence is a correspondence among at least one carrier, at least one PRB, at least one subframe, a redundancy version, and a HARQ process.

The sixteenth correspondence is a correspondence among at least one carrier, at least one PRB, at least one subframe, a redundancy version, a HARQ process, and a HARQ entity.

The seventeenth correspondence is a correspondence among at least one cell index, an identifier of the at least one PRB, at least one transmission time interval TTI number, a redundancy version, and a HARQ process.

The eighteenth correspondence is a correspondence among at least one cell index, an identifier of the at least one PRB, at least one transmission time interval TTI number, a redundancy version, a HARQ process, and a HARQ entity.

The carrier includes an UL carrier or/and a DL carrier.

Optionally, on a basis of the embodiment corresponding to FIG. 4 or the first optional embodiment, in a second optional embodiment of this embodiment of the present invention, the HARQ entity is further obtained according to at least one of the following correspondences: a nineteenth correspondence, the fourth correspondence, a twentieth correspondence, the sixth correspondence, a twenty-first correspondence, the eighth correspondence, a twenty-second correspondence, the ninth correspondence, a twenty-third correspondence, the twelfth correspondence, a twenty-fourth correspondence, the fourteenth correspondence, a twenty-fifth correspondence, the sixteenth correspondence, a twenty-sixth correspondence, or the eighteenth correspondence.

The nineteenth correspondence is a correspondence among at least one carrier, at least one subframe, and a HARQ entity.

The fourth correspondence is a correspondence among at least one carrier, at least one subframe, a HARQ process, and a HARQ entity.

The twentieth correspondence is a correspondence among at least one carrier, a data sending manner, and a HARQ entity.

The sixth correspondence is a correspondence among at least one carrier, a data sending manner, a HARQ process, and a HARQ entity.

The twenty-first correspondence is a correspondence among at least one carrier, at least one PRB, at least one subframe, and a HARQ entity.

The eighth correspondence is a correspondence among at least one carrier, at least one PRB, at least one subframe, a HARQ process, and a HARQ entity.

The twenty-second correspondence is a correspondence among at least one cell index, at least one PRB identifier, at least one transmission time interval TTI number, and a HARQ entity.

The ninth correspondence is a correspondence among at least one cell index, at least one PRB identifier, at least one transmission time interval TTI number, a HARQ process, and a HARQ entity.

The twenty-third correspondence is a correspondence among at least one carrier, at least one subframe, a redundancy version, and a HARQ entity.

The twelfth correspondence is a correspondence among at least one carrier, at least one subframe, a redundancy version, a HARQ process, and a HARQ entity.

The twenty-fourth correspondence is a correspondence among at least one carrier, a data sending manner, a redundancy version, and a HARQ entity.

The fourteenth correspondence is a correspondence among at least one carrier, a data sending manner, a redundancy version, a HARQ process, and a HARQ entity.

The twenty-fifth correspondence is a correspondence among at least one carrier, at least one PRB, at least one subframe, a redundancy version, and a HARQ entity.

The sixteenth correspondence is a correspondence among at least one carrier, at least one PRB, at least one subframe, a redundancy version, a HARQ process, and a HARQ entity.

The twenty-sixth correspondence is a correspondence among at least one cell index, an identifier of the at least one PRB, at least one transmission time interval TTI number, a redundancy version, and a HARQ entity.

The eighteenth correspondence is a correspondence among at least one cell index, an identifier of the at least one PRB, at least one transmission time interval TTI number, a redundancy version, a HARQ process, and a HARQ entity.

The carrier includes an UL carrier or a DL carrier.

Optionally, on a basis of the embodiment corresponding to FIG. 4, or the first or the second optional embodiment, in a third optional embodiment of this embodiment of the present invention, the first correspondence to the twenty-sixth correspondence are indicated by at least one of radio resource control RRC signaling, media access control control element MAC CE signaling, or physical downlink control channel PDCCH signaling that is sent by a second network node.

That the first correspondence to the twenty-sixth correspondence are indicated by physical downlink control channel PDCCH signaling includes:

a HARQ process number of each carrier in the carrier set is indicated by the PDCCH signaling, where the PDCCH signaling carries indication information used to indicate at least one carrier or indication information used to indicate the at least one carrier set.

Optionally, on a basis of any one of the embodiment corresponding to FIG. 4, or the first to the third optional embodiments, in a fourth optional embodiment of this embodiment of the present invention, the carrier set includes a first carrier set that shares a same HARQ process, and the transmission module 402 is specifically configured to perform at least one of the following steps:

receiving first data by using the receiver 501 and the first carrier set, decoding the first data, and sending a first message to the second network node by using the transmitter 502 according to a first decoding result, where when the first decoding result indicates that the decoding succeeds, the first message includes an acknowledgement ACK message, or when the first decoding result indicates that the decoding fails, the first message includes a non-acknowledgement NACK message; and the first message is a signaling message sent to the second network node in a first time period in any one of the following manners: any carrier in the first carrier set, all carriers in the first carrier set, a carrier preconfigured according to radio resource control RRC signaling or media access control MAC signaling, or an UL carrier corresponding to a DL carrier corresponding to the first decoding result in the first carrier set; or receiving the first data by using the receiver 501 and the first carrier set, decoding the first data corresponding to each carrier in the first carrier set, and sending multiple second messages to the second network node according to second decoding results by using the transmitter 502, where when the second decoding result indicates that the decoding succeeds, the second message includes the ACK message, or when the second decoding result indicates that the decoding fails, the second message includes the NACK message; and the second message is a signaling message that is corresponding to each carrier in the first carrier set and that is sent to the second network node on each carrier, or a signaling message sent to the second network node on an UL carrier corresponding to a DL carrier that is corresponding to the second decoding result and that is in the first carrier set.

Optionally, on a basis of the fourth optional embodiment, in a fifth optional embodiment of this embodiment of the present invention, the first message meets at least one of the following conditions:

when the first data received on each carrier in the first carrier set is successfully decoded, the first message includes the ACK message; when the first data received on any carrier in the first carrier set is successfully decoded, the first message includes the ACK message; when the first data received on each carrier in the first carrier set fails to be decoded, the first message includes the NACK message; or when the first data received on any carrier in the first carrier set fails to be decoded, the first message includes the NACK message.

Optionally, on a basis of any one of the embodiment corresponding to FIG. 4, or the first to the fifth optional embodiments, in a sixth optional embodiment of this embodiment of the present invention, the carrier set includes a second carrier set that shares a same HARQ process, and the transmission module 402 is further configured to perform at least one of the following steps:

sending second data to the second network node by using the transmitter 502 and the second carrier set, and after receiving, by using the receiver 501, a third message corresponding to each carrier in the second carrier set, when determining that the third message includes a NACK message corresponding to the second carrier set, determining that transmission of the second data fails, or when determining that the third message includes an ACK message corresponding to the second carrier set, determining that the second data is successfully transmitted, where the third message is a signaling message that is corresponding to the second carrier set and that is sent to the network node by the second network node in a preset second time period in any one of the following manners: any carrier in the second carrier set, all carriers in the second carrier set, a carrier preconfigured according to the RRC signaling or the MAC signaling, or a carrier for sending downlink control information DCI; or sending the second data to the second network node by using the transmitter 502 and the second carrier set; and after receiving fourth messages by using the receiver 501, if each of the fourth messages includes an ACK message, determining that the second data is successfully transmitted, or if any one of the fourth messages includes an ACK message, determining that the second data is successfully transmitted; or if each of the fourth messages includes a NACK message, determining that transmission of the second data fails, or if any one of the fourth messages includes a NACK message, determining that transmission of the second data fails; or if none of the fourth messages is received, determining that transmission of the second data fails, or if any one of the fourth messages is not received, determining that transmission of the second data fails, where the fourth message is a signaling message that is corresponding to each carrier in the second carrier set and that is sent to the network node by the second network node on each carrier.

Optionally, on a basis of the sixth optional embodiment, in a seventh optional embodiment of this embodiment of the present invention, the transmission module 402 is further configured to perform at least one of the following steps:

selecting at least one carrier from the second carrier set to retransmit the second data;
performing, on the carrier corresponding to the third message or the fourth message, an operation of retransmitting the second data;
when the fourth message that is corresponding to each carrier and that is received by using the receiver 501 is a NACK message, starting an operation of retransmitting the second data;
when the fourth message that is corresponding to any carrier and that is received by using the receiver 501 is a NACK message, starting an operation of retransmitting the second data;
when the receiver 501 does not receive fourth messages corresponding to all carriers in the second carrier set, starting an operation of retransmitting the second data; or
when the receiver 501 does not receive a fourth message corresponding to any carrier in the second carrier set, starting an operation of retransmitting the second data.

Optionally, on a basis of any one of the embodiment corresponding to FIG. 4, or the first to the seventh optional embodiments, in an eighth optional embodiment of this embodiment of the present invention, the processing module 401 is further configured to:

increment a previous variable Current-Transmit-Number by 1 each time after the second data is retransmitted on any carrier in the carrier set by using the transmitter 502.

Alternatively, all carriers in the carrier set are in a one-to-one correspondence with variables Current-Transmit-Number.
The processing module 401 further performs at least one of the following steps:

clearing a HARQ buffer when determining that a variable Current-Transmit-Number of the any carrier reaches a preset maximum value; or
clearing the HARQ buffer when determining that a variable Current-Transmit-Number of each carrier in the carrier set reaches a preset maximum value.

Optionally, on a basis of the fourth to the eighth optional embodiments, in a ninth optional embodiment of this embodiment of the present invention, the transmission module 402 is specifically further configured to perform at least one of the following steps:

receiving, by using the receiver 501, the first data retransmitted by the second network node according to a preset third time period by using the first carrier set, where each carrier in the first carrier set is identified by a new data indicator NDI, and the NDI is used to indicate that the first data currently transmitted on a carrier is new data or retransmitted data; or
after receiving, by using the receiver 501, a NACK response returned by the second network node according to the NACK or receiving no NACK response within a preset time, receiving, by using the receiver 501, the first data retransmitted by the second network node by using the third carrier set, where each carrier in the third carrier set is identified by an NDI, the NDI is used to indicate that the first data currently transmitted on a carrier is new data or retransmitted data, and the third carrier set is a carrier set with a failure in transmitting the first data, of the first carrier set.

Optionally, on a basis of any one of the embodiment corresponding to FIG. 4, or the first to the ninth optional embodiments, in a tenth optional embodiment of this embodiment of the present invention, the transmission module 402 is specifically further configured to perform at least one of the following steps:

retransmitting the second data to the second network node according to a preset fourth time period by using the transmitter 502 and the second carrier set, where each carrier in the second carrier set is identified by a new data indicator NDI, and the NDI is used to indicate that the second data currently transmitted on a carrier is new data or retransmitted data; or
after determining that transmission of the second data fails, retransmitting the second data to the second network node by using the transmitter 502 and a fourth carrier set, where each carrier in the eighth carrier set is identified by an NDI, the NDI is used to indicate that the fourth data currently transmitted on a carrier is new data or retransmitted data, and the fourth carrier set is an UL carrier set with a failure in transmitting the second data, of the second carrier set.

Optionally, on a basis of any one of the embodiment corresponding to FIG. 4, or the first to the tenth optional embodiments, in an eleventh optional embodiment of this embodiment of the present invention, the carrier set includes a fifth carrier set that is used to send the same data and that uses a separate HARQ process, and the transmission module 402 is specifically further configured to perform at least one of the following steps:

sending third data to the second network node by using the transmitter 502 and the fifth carrier set, and after receiving a fifth message by using the receiver 501, when determining that the fifth message includes a NACK message corresponding to the fifth carrier set, determining that transmission of the third data fails, or when determining that the fifth message includes an ACK message corresponding to the fifth carrier set, determining that the third data is successfully transmitted, where the fifth message is a signaling message that is corresponding to the second carrier set and that is sent to the network node by the second network node in a preset fifth time period in any one of the following manners: any carrier in the fifth carrier set, all carriers in the fifth carrier set, a carrier preconfigured according to the RRC signaling or the MAC signaling, or a carrier for sending the DCI; or

sending the third data to the second network node by using the transmitter 502 and the fifth carrier set, and after receiving a sixth message by using the receiver 501, when determining that the sixth message includes a NACK message corresponding to the fifth carrier set used to send the third data, determining that transmission of the third data fails, or when determining that the sixth message includes at least one ACK message, determining that the third data is successfully transmitted, where the sixth message is a signaling message that is corresponding to each carrier in the fifth carrier set and that is sent to the network node by the second network node on each carrier.

Optionally, on a basis of any one of the embodiment corresponding to FIG. 4, or the first to the eleventh optional embodiments, in a twelfth optional embodiment of this embodiment of the present invention, the carrier set includes a sixth carrier set that is used to send the same data and that uses a separate HARQ process, and the transmission module 402 is further configured to perform at least one of the following steps:

receiving fourth data by using the receiver 501 and the sixth carrier set, decoding the fourth data, and sending a seventh message to the second network node according to a third decoding result by using the transmitter 502, where when the third decoding result indicates that the decoding succeeds, the seventh message includes the ACK message, or when the third decoding result indicates that the decoding fails, the seventh message includes the NACK message; and the seventh message is a signaling message sent to the second network node by the first network node in a sixth time period in any one of the following manners: any carrier in the sixth carrier set, all carriers in the sixth carrier set, a carrier preconfigured according to the RRC signaling or the MAC signaling, or an UL carrier corresponding to a DL carrier that is corresponding to the third decoding result and that is in the sixth carrier set; or

receiving the fourth data by using the receiver 501 and the sixth carrier set, decoding the fourth data, and sending an eighth message to the second network node according to a fourth decoding result by using the transmitter 502, where when the fourth decoding result indicates that the decoding succeeds, the fourth message includes the ACK message, or when the fourth decoding result indicates that the decoding fails, the eighth message includes the NACK message; and the eighth message is a signaling message that is corresponding to each carrier in the sixth carrier set and that is sent to the second network node on each carrier, or a signaling message sent to the second network node on an UL carrier corresponding to a DL carrier that is corresponding to the fourth decoding result and that is in the sixth carrier set.

Optionally, on a basis of the eleventh or twelfth optional embodiment, in a thirteenth optional embodiment of this embodiment of the present invention, the transmission module 402 is further configured to perform at least one of the following steps:

retransmitting the third data to the second network node according to a preset seventh time period by using the transmitter 502 and the sixth carrier set, where each carrier in the sixth carrier set is identified by a new data indicator NDI, and the NDI is used to indicate that the third data currently transmitted on a carrier is new data or retransmitted data; or after determining that transmission of the third data fails, retransmitting the third data to the second network node by using the transmitter 502 and an eighth carrier set, where each carrier in the eighth carrier set is identified by an NDI, the NDI is used to indicate that the third data currently transmitted on a carrier is new data or retransmitted data, and the eighth carrier set is a carrier set with a failure in transmitting the third data, of the sixth carrier set.

Optionally, on a basis of the eleventh to the thirteenth optional embodiments, in a fourteenth optional embodiment of this embodiment of the present invention, the transmission module 402 is further configured to perform at least one of the following steps:

receiving, by using the receiver 501, the fourth data retransmitted by the second network node according to a preset sixth time period by using the fifth carrier set, where each carrier in the fifth carrier set is identified by a new data indicator NDI, and the NDI is used to indicate that the fourth data currently transmitted on a carrier is new data or retransmitted data; or

after receiving, by using the receiver 501, a NACK response returned by the second network node according to the NACK or receiving no NACK response within the preset time, receiving the fourth data retransmitted by the second network node by using a seventh carrier set, where each carrier in the seventh carrier set is identified by an NDI, the NDI is used to indicate that the fourth data currently transmitted on a carrier is new data or retransmitted data, and the seventh carrier set is a carrier set with a failure in transmitting the fourth data, of the fifth carrier set.

Optionally, on a basis of the seventh to the fourteenth optional embodiments, in a fifteenth optional embodiment of this embodiment of the present invention, the first time period, the second time period, the fifth time period, or the sixth time period is obtained according to any one of the following:

a different service type configuration;
a different data radio bearer DRB configuration;
a different carrier configuration;
a different HARQ process configuration; or
a configuration of the RRC signaling, the MAC signaling, or Packet Data Convergence Protocol PDCP signaling.

Optionally, on a basis of any one of the embodiment corresponding to FIG. 4, or the first to the fifteenth optional embodiments, in a sixteenth optional embodiment of this embodiment of the present invention, a HARQ process of each carrier is scheduled by a corresponding physical downlink control channel PDCCH, a HARQ process number and a redundancy version number that are corresponding to each carrier are indicated by the DCI, each carrier is uniquely corresponding to the PDCCH, and the DCI carries indication information of multiple carriers or indication information of the carrier set;
or,
the shared HARQ process is scheduled by a corresponding shared PDCCH, a HARQ process number and a redundancy version number that are corresponding to each DL carrier are indicated by the DCI, the shared HARQ process is uniquely corresponding to the shared PDCCH, the shared HARQ process is in a one-to-one correspondence with the carrier set, and there is at least one shared HARQ process.

Optionally, on a basis of any one of the embodiment corresponding to FIG. 4, or the first to the sixteenth optional embodiments, in a seventeenth optional embodiment of this embodiment of the present invention, when the carrier set includes one carrier, the carrier includes multiple scheduling units that transmit same data; or

when the carrier set includes more than two carriers, same data is transmitted on each carrier in the carrier set.
Optionally, on a basis of any one of the embodiment corresponding to FIG. 4, or the first to the seventeenth optional embodiments, in an eighteenth optional embodiment of this embodiment of the present invention, the processing module 401 is further configured to:

combine data transmitted by the transmission module 402 by using each carrier set of the carrier set, to obtain the data, and decode the data.

The transmitter 502 of the transmission module 402 is further configured to send, to the second network node according to a decoding result, a signaling message corresponding to the decoding result.
Optionally, on a basis of the embodiment corresponding to FIG. 4, or the first to the eighteenth optional embodiments, in a nineteenth optional embodiment of this embodiment of the present invention, when the network node is user equipment UE, the transmission module 402 is further configured to perform one of the following steps:

receiving at least one of DL data or DL signaling by using the receiver 501 of the transmission module 402 and the at least one DL carrier set; or
sending at least one of UL data or UL signaling by using the transmitter 502 of the transmission module 402 and the at least one UL carrier set.

The foregoing describes in details the hybrid automatic repeat request management method and the network node in the embodiments of the present invention, a communications system in an embodiment of the present invention includes:

the network node according to any one of the embodiment corresponding to FIG. 4, or the first to the nineteenth optional embodiments of the embodiment corresponding to FIG. 4.

Optionally, the communications system further includes a second network node.
In the foregoing embodiments, the description of each embodiment has respective focuses. For a part that is not described in detail in an embodiment, reference may be made to related descriptions in other embodiments.
It may be clearly understood by a person skilled in the art that, for the purpose of convenient and brief description, for a specific working process of the foregoing system, apparatus, and unit, reference may be made to a corresponding process in the foregoing method embodiments, and details are not described herein.
In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, multiple units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on multiple network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a computer device (which may be a personal computer, a server, or a network device) to perform all or some of the steps of the methods described in the embodiments of the present invention. The foregoing storage medium includes any medium that can store program code, such as a USB flash drive, a removable hard disk, a read-only memory (ROM, Read-Only Memory), a random access memory (RAM, Random Access Memory), a magnetic disk, or an optical disc.

The foregoing describes in detail a power supply troubleshooting method and apparatus that are provided by the present invention. In this specification, specific examples are used to describe the principle and implementations of the present invention, and the description of the embodiments is only intended to help understand the method and core idea of the present invention. Meanwhile, a person of ordinary skill in the art may, based on the idea of the present invention, make modifications with respect to the specific implementations and the application scope. Therefore, the content of this specification shall not be construed as a limitation to the present invention.

**Claims**

1. A hybrid automatic repeat request management method, comprising:

   determining, by a first network node according to at least one of a first correspondence between a carrier set and a hybrid automatic repeat request HARQ process or a second correspondence between the carrier set and a HARQ entity, a HARQ process and/or a HARQ entity corresponding to the carrier set, wherein the carrier set comprises at least one of: at least one uplink UL carrier set or at least one downlink DL carrier set; and
   receiving and/or sending, by the first network node, data and/or signaling according to the HARQ process and/or the HARQ entity by using the carrier set.

2. The method according to claim 1, wherein the HARQ process is further obtained according to at least one of the following correspondences: a third correspondence, a fourth correspondence, a fifth correspondence, a sixth correspondence, a seventh correspondence, an eighth correspondence, a ninth correspondence, a tenth correspondence, an eleventh correspondence, a twelfth correspondence, a thirteenth correspondence, a fourteenth correspondence, a fifteenth correspondence, a sixteenth correspondence, a seventeenth correspondence, or an eighteenth correspondence, wherein
   the third correspondence is a correspondence among at least one carrier, at least one subframe, and a HARQ process;
   the fourth correspondence is a correspondence among at least one carrier, at least one subframe, a HARQ process, and a HARQ entity;
   the fifth correspondence is a correspondence among at least one carrier, a data sending manner, and a HARQ process;
   the sixth correspondence is a correspondence among at least one carrier, a data sending manner, a HARQ process, and a HARQ entity;
   the seventh correspondence is a correspondence among at least one carrier, at least one physical resource block PRB, at least one subframe, and a HARQ process;
   the eighth correspondence is a correspondence among at least one carrier, at least one PRB, at least one subframe, a HARQ process, and a HARQ entity;
   the ninth correspondence is a correspondence among at least one cell index, at least one PRB identifier, at least one transmission time interval TTI number, and a HARQ process;
   the tenth correspondence is a correspondence among at least one cell index, at least one PRB identifier, at least one transmission time interval TTI number, a HARQ process, and a HARQ entity;

the eleventh correspondence is a correspondence among at least one carrier, at least one subframe, a redundancy version, and a HARQ process;

the twelfth correspondence is a correspondence among at least one carrier, at least one subframe, a redundancy version, a HARQ process, and a HARQ entity;

the thirteenth correspondence is a correspondence among at least one carrier, a data sending manner, a redundancy version, and a HARQ process;

the fourteenth correspondence is a correspondence among at least one carrier, a data sending manner, a redundancy version, a HARQ process, and a HARQ entity;

the fifteenth correspondence is a correspondence among at least one carrier, at least one PRB, at least one subframe, a redundancy version, and a HARQ process;

the sixteenth correspondence is a correspondence among at least one carrier, at least one PRB, at least one subframe, a redundancy version, a HARQ process, and a HARQ entity;

the seventeenth correspondence is a correspondence among at least one cell index, an identifier of the at least one PRB, at least one transmission time interval TTI number, a redundancy version, and a HARQ process;

the eighteenth correspondence is a correspondence among at least one cell index, an identifier of the at least one PRB, at least one transmission time interval TTI number, a redundancy version, a HARQ process, and a HARQ entity; and

the carrier comprises an UL carrier or/and a DL carrier.

3. The method according to claim 1 or 2, wherein the HARQ entity is further obtained according to at least one of the following correspondences: a nineteenth correspondence, the fourth correspondence, a twentieth correspondence, the sixth correspondence, a twenty-first correspondence, the eighth correspondence, a twenty-second correspondence, the ninth correspondence, a twenty-third correspondence, the twelfth correspondence, a twenty-fourth correspondence, the fourteenth correspondence, a twenty-fifth correspondence, the sixteenth correspondence, a twenty-sixth correspondence, or the eighteenth correspondence, wherein

the nineteenth correspondence is a correspondence among at least one carrier, at least one subframe, and a HARQ entity;

the fourth correspondence is a correspondence among at least one carrier, at least one subframe, a HARQ process, and a HARQ entity;

the twentieth correspondence is a correspondence among at least one carrier, a data sending manner, and a HARQ entity;

the sixth correspondence is a correspondence among at least one carrier, a data sending manner, a HARQ process, and a HARQ entity;

the twenty-first correspondence is a correspondence among at least one carrier, at least one PRB, at least one subframe, and a HARQ entity;

the eighth correspondence is a correspondence among at least one carrier, at least one PRB, at least one subframe, a HARQ process, and a HARQ entity;

the twenty-second correspondence is a correspondence among at least one cell index, at least one PRB identifier, at least one transmission time interval TTI number, and a HARQ entity;

the ninth correspondence is a correspondence among at least one cell index, at least one PRB identifier, at least one transmission time interval TTI number, a HARQ process, and a HARQ entity;

the twenty-third correspondence is a correspondence among at least one carrier, at least one subframe, a redundancy version, and a HARQ entity;

the twelfth correspondence is a correspondence among at least one carrier, at least one subframe, a redundancy version, a HARQ process, and a HARQ entity;

the twenty-fourth correspondence is a correspondence among at least one carrier, a data sending manner, a redundancy version, and a HARQ entity;

the fourteenth correspondence is a correspondence among at least one carrier, a data sending manner, a redundancy version, a HARQ process, and a HARQ entity;

the twenty-fifth correspondence is a correspondence among at least one carrier, at least one PRB, at least one subframe, a redundancy version, and a HARQ entity;

the sixteenth correspondence is a correspondence among at least one carrier, at least one PRB, at least one subframe, a redundancy version, a HARQ process, and a HARQ entity;

the twenty-sixth correspondence is a correspondence among at least one cell index, an identifier of the at least one PRB, at least one transmission time interval TTI number, a redundancy version, and a HARQ entity;

the eighteenth correspondence is a correspondence among at least one cell index, an identifier of the at least one PRB, at least one transmission time interval TTI number, a redundancy version, a HARQ process, and a HARQ entity; and

the carrier comprises an UL carrier or a DL carrier.

4. The method according to any one of claims 1 to 3, wherein the first correspondence to the twenty-sixth correspondence are indicated by at least one of radio resource control RRC signaling, media access control control element MAC CE signaling, or physical downlink control channel PDCCH signaling that is sent by a second network node; and

that the first correspondence to the twenty-sixth correspondence are indicated by physical downlink control channel PDCCH signaling comprises:

> a HARQ process number of each carrier in the carrier set is indicated by the PDCCH signaling, wherein the PDCCH signaling carries indication information used to indicate at least one carrier or indication information used to indicate the at least one carrier set.

5. The method according to any one of claims 1 to 4, wherein the carrier set comprises a first carrier set that shares a same HARQ process, and the receiving data and sending signaling by using the carrier set comprises at least one of the following steps:

> receiving, by the first network node, first data by using the first carrier set, decoding the first data, and sending a first message to the second network node according to a first decoding result, wherein when the first decoding result indicates that the decoding succeeds, the first message comprises an acknowledgement ACK message, or when the first decoding result indicates that the decoding fails, the first message comprises a non-acknowledgement NACK message; and the first message is a signaling message sent to the second network node by the first network node in a first time period in any one of the following manners: any carrier in the first carrier set, all carriers in the first carrier set, a carrier preconfigured according to radio resource control RRC signaling or media access control MAC signaling, or an UL carrier corresponding to a DL carrier corresponding to the first decoding result in the first carrier set; or
> receiving, by the first network node, the first data by using the first carrier set, decoding the first data corresponding to each carrier in the first carrier set, and sending multiple second messages to the second network node according to second decoding results, wherein when the second decoding result indicates that the decoding succeeds, the second message comprises the ACK message, or when the second decoding result indicates that the decoding fails, the second message comprises the NACK message; and the second message is a signaling message that is corresponding to each carrier in the first carrier set and that is sent to the second network node by the first network node on each carrier, or a signaling message sent to the second network node on an UL carrier corresponding to a DL carrier that is corresponding to the second decoding result and that is in the first carrier set.

6. The method according to claim 5, wherein the first message for the second network node meets at least one of the following conditions:

> when the first network node successfully decodes the first data received on each carrier in the first carrier set, the first message comprises the ACK message;
> when the first network node successfully decodes the first data received on any carrier in the first carrier set, the first message comprises the ACK message;
> when the first network node fails to decode the first data received on each carrier in the first carrier set, the first message comprises the NACK message; or
> when the first network node fails to decode the first data received on any carrier in the first carrier set, the first message comprises the NACK message.

7. The method according to any one of claims 1 to 6, wherein the carrier set comprises a second carrier set that shares a same HARQ process, and the sending data and receiving signaling by using the carrier set comprises at least one of the following steps:

> sending, by the first network node, second data to the second network node by using the second carrier set, and after receiving a third message corresponding to each carrier in the second carrier set, when determining that the third message comprises a NACK message corresponding to the second carrier set, determining that transmission of the second data fails, or when determining that the third message comprises an ACK message corresponding to the second carrier set, determining that the second data is successfully transmitted, wherein the third message is a signaling message that is corresponding to the second carrier set and that is sent to the first network node by the second network node in a preset second time period in any one of the following manners: any carrier in the second carrier set, all carriers in the second carrier set, a carrier preconfigured according to the RRC signaling or the MAC signaling, or a carrier for sending downlink control information DCI; or
> sending, by the first network node, the second data to the second network node by using the second carrier set; and after receiving fourth messages, if each of the fourth messages comprises an ACK message, determining that the second data is successfully transmitted, or if any one of the fourth messages comprises an ACK message, determining that the second data is successfully transmitted; or if each of the fourth messages comprises a NACK message, determining that transmission of the second data fails, or if any one of the fourth messages comprises a NACK message, determining that transmission of the second data fails; or if none of the fourth messages is received, determining that transmission of the second data fails, or if any one of the fourth messages is not received, determining that transmission of the second data fails, wherein the fourth message is a signaling message that is corresponding to each carrier in the second carrier set and that is sent to the first network node by the second network node on each carrier.

8. The method according to claim 7, wherein after the sending, by the first network node, second data to the second network node by using the second carrier set, the sending, by the first network node, data by using the carrier set specifically comprises at least one of the following:

selecting, by the first network node, at least one carrier from the second carrier set to retransmit the second data;
performing, by the first network node on the carrier corresponding to the third message or the fourth message, an operation of retransmitting the second data;
when the fourth message that is corresponding to each carrier and that is received by the first network node is a NACK message, starting an operation of retransmitting the second data;
when the fourth message that is corresponding to any carrier and that is received by the first network node is a NACK message, starting an operation of retransmitting the second data;
when the first network node does not receive the fourth messages corresponding to all carriers in the second carrier set, starting an operation of retransmitting the second data; or
when the first network node does not receive the fourth message corresponding to any carrier in the second carrier set, starting an operation of retransmitting the second data.

9. The method according to any one of claims 1 to 8, wherein after the second data is retransmitted, the method further comprises one of the following steps:

counting, by the first network node, a variable Current-Transmit-Number corresponding to each carrier in the carrier set on which the second data is retransmitted, wherein all carriers in the carrier set are in a one-to-one correspondence with variables Current-Transmit-Number; or
counting, by the first network node, variables Current-Transmit-Number corresponding to all carriers in the carrier set, wherein

a previous variable Current-Transmit-Number is incremented by 1 each time after the first network node retransmits the second data on any carrier in the carrier set; and
the first network node further performs at least one of the following steps:

clearing, by the first network node, a HARQ buffer when determining that a variable Current-Transmit-Number of the any carrier reaches a preset maximum value;
clearing, by the first network node, the HARQ buffer when determining that a variable Current-Transmit-Number of each carrier in the carrier set reaches a preset maximum value; or
clearing, by the first network node, the HARQ buffer when determining that each of the variables Current-Transmit-Number corresponding to all carriers in the carrier set reaches a preset maximum value.

10. The method according to any one of claims 6 to 9, wherein after the sending a first message to the second network node according to a first decoding result, or after the sending second messages to the second network node according to a second decoding result, the receiving data by using the carrier set specifically further comprises at least one of the following steps:

receiving, by the first network node, the first data retransmitted by the second network node according to a preset third time period by using the first carrier set, wherein each carrier in the first carrier set is identified by a new data indicator NDI, and the NDI is used to indicate that the first data currently transmitted on a carrier is new data or retransmitted data; or
after receiving a NACK response returned by the second network node according to the NACK or receiving no NACK response within a preset time, receiving, by the first network node, the first data retransmitted by the second network node by using the third carrier set, wherein each carrier in the third carrier set is identified by an NDI, the NDI is used to indicate that the first data currently transmitted on a carrier is new data or retransmitted data, and the third carrier set is a carrier set with a failure in transmitting the first data, of the first carrier set.

11. The method according to any one of claims 6 to 10, wherein after the sending, by the first network node, second data to the second network node by using the second carrier set, the sending data by using the carrier set specifically further comprises at least one of the following steps:

retransmitting, by the first network node, the second data to the second network node according to a preset fourth time period by using the second carrier set, wherein each carrier in the second carrier set is identified by a new data indicator NDI, and the NDI is used to indicate that the second data currently transmitted on a carrier is new data or retransmitted data; or after determining that transmission of the second data fails, retransmitting, by the first network node, the second data to the second network node by using a fourth carrier set, wherein each carrier in the eighth carrier set is identified by an NDI, the NDI is used to indicate that the fourth data currently transmitted on a carrier is new data or retransmitted data, and the fourth carrier set is an UL carrier set with a failure in transmitting the second data, of the second carrier set.

12. The method according to any one of claims 1 to 11, wherein the carrier set comprises a fifth carrier set that is used to send the same data and that uses a separate HARQ process, and the receiving signaling and sending data by using the carrier set specifically comprises at least one of the following steps:

> sending, by the first network node, third data to the second network node by using the fifth carrier set, and after receiving a fifth message, when determining that the fifth message comprises a NACK message corresponding to the fifth carrier set, determining that transmission of the third data fails, or when determining that the fifth message comprises an ACK message corresponding to the fifth carrier set, determining that the third data is successfully transmitted, wherein the fifth message is a signaling message that is corresponding to the second carrier set and that is sent to the first network node by the second network node in a preset fifth time period in any one of the following manners: any carrier in the fifth carrier set, all carriers in the fifth carrier set, a carrier preconfigured according to the RRC signaling or the MAC signaling, or a carrier for sending the DCI; or
> sending, by the first network node, the third data to the second network node by using the fifth carrier set, and after receiving sixth messages, when determining that the sixth messages comprise NACK messages corresponding to the fifth carrier set used to send the third data, determining that transmission of the third data fails, or when determining that the sixth messages comprise at least one ACK message, determining that the third data is successfully transmitted, wherein the sixth message is a signaling message that is corresponding to each carrier in the fifth carrier set and that is sent to the first network node by the second network node on each carrier.

13. The method according to any one of claims 1 to 12, wherein the carrier set comprises a sixth carrier set that is used to send the same data and that uses a separate HARQ process, and the receiving data and sending signaling by using the carrier set comprises at least one of the following steps:

> receiving, by the first network node, fourth data by using the sixth carrier set, decoding the fourth data, and sending a seventh message to the second network node according to a third decoding result, wherein when the third decoding result indicates that the decoding succeeds, the seventh message comprises the ACK message, or when the third decoding result indicates that the decoding fails, the seventh message comprises the NACK message; and the seventh message is a signaling message sent to the second network node by the first network node in a sixth time period in any one of the following manners: any carrier in the sixth carrier set, all carriers in the sixth carrier set, a carrier preconfigured according to the RRC signaling or the MAC signaling, or an UL carrier corresponding to a DL carrier that is corresponding to the third decoding result and that is in the sixth carrier set; or receiving, by the first network node, the fourth data by using the sixth carrier set, decoding the fourth data, and sending an eighth message to the second network node according to a fourth decoding result, wherein when the fourth decoding result indicates that the decoding succeeds, the fourth message comprises the ACK message, or when the fourth decoding result indicates that the decoding fails, the eighth message comprises the NACK message; and the eighth message is a signaling message that is corresponding to each carrier in the sixth carrier set and that is sent to the second network node by the first network node on each carrier, or a signaling message sent to the second network node on an UL carrier corresponding to a DL carrier that is corresponding to the fourth decoding result and that is in the sixth carrier set.

14. The method according to claim 12 or 13, wherein after the sending a seventh message to the second network node according to a third decoding result, or after the sending an eighth message to the second network node according to a fourth decoding result, the receiving data by using the carrier set specifically further comprises at least one of the following steps:

> retransmitting, by the first network node, the third data to the second network node according to a preset seventh time period by using the sixth carrier set, wherein each carrier in the sixth carrier set is identified by a new data indicator NDI, and the NDI is used to indicate that the third data currently transmitted on a carrier is new data or retransmitted data; or

after determining that transmission of the third data fails, retransmitting, by the first network node, the third data to the second network node by using an eighth carrier set, wherein each carrier in the eighth carrier set is identified by an NDI, the NDI is used to indicate that the third data currently transmitted on a carrier is new data or retransmitted data, and the eighth carrier set is a carrier set with a failure in transmitting the third data, of the sixth carrier set.

15. The method according to any one of claims 12 to 14, wherein after the determining that transmission of the third data fails, the sending data by using the carrier set specifically further comprises at least one of the following steps:

receiving, by the first network node, the fourth data retransmitted by the second network node according to a preset sixth time period by using the fifth carrier set, wherein each carrier in the fifth carrier set is identified by a new data indicator NDI, and the NDI is used to indicate that the fourth data currently transmitted on a carrier is new data or retransmitted data; or

after the first network node receives a NACK response returned by the second network node according to the NACK or receives no NACK response within the preset time, receiving, by the first network node, the fourth data retransmitted by the second network node by using a seventh carrier set, wherein each carrier in the seventh carrier set is identified by an NDI, the NDI is used to indicate that the fourth data currently transmitted on a carrier is new data or retransmitted data, and the seventh carrier set is a carrier set with a failure in transmitting the fourth data, of the fifth carrier set.

16. The method according to any one of claims 8 to 15, wherein the first time period, the second time period, the fifth time period, or the sixth time period is obtained according to any one of the following:

a different service type configuration;
a different data radio bearer DRB configuration;
a different carrier configuration;
a different HARQ process configuration; or
a configuration of the RRC signaling, the MAC signaling, or Packet Data Convergence Protocol PDCP signaling.

17. The method according to any one of claims 2 to 16, wherein a HARQ process of each carrier is scheduled by a corresponding physical downlink control channel PDCCH, a HARQ process number and a redundancy version number that are corresponding to each carrier are indicated by the DCI, each carrier is uniquely corresponding to the PDCCH, and the DCI carries indication information of multiple carriers or indication information of the carrier set;
or,

the shared HARQ process is scheduled by a corresponding shared PDCCH, a HARQ process number and a redundancy version number that are corresponding to each DL carrier are indicated by the DCI, the shared HARQ process is uniquely corresponding to the shared PDCCH, the shared HARQ process is in a one-to-one correspondence with the carrier set, and there is at least one shared HARQ process.

18. The method according to any one of claims 1 to 17, wherein when the carrier set comprises one carrier, the carrier comprises multiple scheduling units for transmitting same data; or
when the carrier set comprises more than two carriers, same data is transmitted on each carrier in the carrier set.

19. The method according to any one of claims 1 to 18, wherein after the receiving, by the first network node, data by using the carrier set, the method further comprises:

combining, by the first network node, data transmitted by using each carrier set of the carrier set, to obtain the data, decoding the data, and sending, to the second network node according to a decoding result, a signaling message corresponding to the decoding result.

20. The method according to any one of claims 1 to 19, wherein when the network node is user equipment UE, the receiving and/or sending, by the first network node, data and/or signaling by using the carrier set specifically comprises one of the following steps:

receiving, by the UE, at least one of DL data or DL signaling by using the at least one DL carrier set; or
sending, by the UE, at least one of UL data or UL signaling by using the at least one UL carrier set.

21. A network node, wherein the network node comprises:

a processing module, configured to determine, according to at least one of a first correspondence between a carrier set and a hybrid automatic repeat request HARQ process or a second correspondence between the carrier set and a HARQ entity, a HARQ process and/or a HARQ entity corresponding to the carrier set, wherein the carrier set comprises at least one of: at least one uplink UL carrier set or at least one downlink DL carrier set; and

a transmission module, configured to receive and/or send data and/or signaling according to the HARQ process and/or the HARQ entity by using the carrier set.

22. The network node according to claim 21, wherein the HARQ process is further obtained according to at least one of the following correspondences: a third correspondence, a fourth correspondence, a fifth correspondence, a sixth correspondence, a seventh correspondence, an eighth correspondence, a ninth correspondence, a tenth correspondence, an eleventh correspondence, a twelfth correspondence, a thirteenth correspondence, a fourteenth correspondence, a fifteenth correspondence, a sixteenth correspondence, a seventeenth correspondence, or an eighteenth correspondence, wherein

the third correspondence is a correspondence among at least one carrier, at least one subframe, and a HARQ process;

the fourth correspondence is a correspondence among at least one carrier, at least one subframe, a HARQ process, and a HARQ entity;

the fifth correspondence is a correspondence among at least one carrier, a data sending manner, and a HARQ process;

the sixth correspondence is a correspondence among at least one carrier, a data sending manner, a HARQ process, and a HARQ entity;

the seventh correspondence is a correspondence among at least one carrier, at least one physical resource block PRB, at least one subframe, and a HARQ process;

the eighth correspondence is a correspondence among at least one carrier, at least one PRB, at least one subframe, a HARQ process, and a HARQ entity;

the ninth correspondence is a correspondence among at least one cell index, at least one PRB identifier, at least one transmission time interval TTI number, and a HARQ process;

the tenth correspondence is a correspondence among at least one cell index, at least one PRB identifier, at least one transmission time interval TTI number, a HARQ process, and a HARQ entity;

the eleventh correspondence is a correspondence among at least one carrier, at least one subframe, a redundancy version, and a HARQ process;

the twelfth correspondence is a correspondence among at least one carrier, at least one subframe, a redundancy version, a HARQ process, and a HARQ entity;

the thirteenth correspondence is a correspondence among at least one carrier, a data sending manner, a redundancy version, and a HARQ process;

the fourteenth correspondence is a correspondence among at least one carrier, a data sending manner, a redundancy version, a HARQ process, and a HARQ entity;

the fifteenth correspondence is a correspondence among at least one carrier, at least one PRB, at least one subframe, a redundancy version, and a HARQ process;

the sixteenth correspondence is a correspondence among at least one carrier, at least one PRB, at least one subframe, a redundancy version, a HARQ process, and a HARQ entity;

the seventeenth correspondence is a correspondence among at least one cell index, an identifier of the at least one PRB, at least one transmission time interval TTI number, a redundancy version, and a HARQ process;

the eighteenth correspondence is a correspondence among at least one cell index, an identifier of the at least one PRB, at least one transmission time interval TTI number, a redundancy version, a HARQ process, and a HARQ entity; and

the carrier comprises an UL carrier or/and a DL carrier.

23. The network node according to claim 21 or 22, wherein the HARQ entity is further obtained according to at least one of the following correspondences: a nineteenth correspondence, the fourth correspondence, a twentieth correspondence, the sixth correspondence, a twenty-first correspondence, the eighth correspondence, a twenty-second correspondence, the ninth correspondence, a twenty-third correspondence, the twelfth correspondence, a twenty-fourth correspondence, the fourteenth correspondence, a twenty-fifth correspondence, the sixteenth correspondence, a twenty-sixth correspondence, or the eighteenth correspondence, wherein

the nineteenth correspondence is a correspondence among at least one carrier, at least one subframe, and a HARQ entity;

the fourth correspondence is a correspondence among at least one carrier, at least one subframe, a HARQ process, and a HARQ entity;

the twentieth correspondence is a correspondence among at least one carrier, a data sending manner, and a HARQ entity;

the sixth correspondence is a correspondence among at least one carrier, a data sending manner, a HARQ process, and a HARQ entity;

the twenty-first correspondence is a correspondence among at least one carrier, at least one PRB, at least one subframe, and a HARQ entity;

the eighth correspondence is a correspondence among at least one carrier, at least one PRB, at least one subframe, a HARQ process, and a HARQ entity;
the twenty-second correspondence is a correspondence among at least one cell index, at least one PRB identifier, at least one transmission time interval TTI number, and a HARQ entity;
the ninth correspondence is a correspondence among at least one cell index, at least one PRB identifier, at least one transmission time interval TTI number, a HARQ process, and a HARQ entity;
the twenty-third correspondence is a correspondence among at least one carrier, at least one subframe, a redundancy version, and a HARQ entity;
the twelfth correspondence is a correspondence among at least one carrier, at least one subframe, a redundancy version, a HARQ process, and a HARQ entity;
the twenty-fourth correspondence is a correspondence among at least one carrier, a data sending manner, a redundancy version, and a HARQ entity;
the fourteenth correspondence is a correspondence among at least one carrier, a data sending manner, a redundancy version, a HARQ process, and a HARQ entity;
the twenty-fifth correspondence is a correspondence among at least one carrier, at least one PRB, at least one subframe, a redundancy version, and a HARQ entity;
the sixteenth correspondence is a correspondence among at least one carrier, at least one PRB, at least one subframe, a redundancy version, a HARQ process, and a HARQ entity;
the twenty-sixth correspondence is a correspondence among at least one cell index, an identifier of the at least one PRB, at least one transmission time interval TTI number, a redundancy version, and a HARQ entity;
the eighteenth correspondence is a correspondence among at least one cell index, an identifier of the at least one PRB, at least one transmission time interval TTI number, a redundancy version, a HARQ process, and a HARQ entity; and
the carrier comprises an UL carrier or a DL carrier.

24. The network node according to any one of claims 21 to 23, wherein the first correspondence to the twenty-sixth correspondence are indicated by at least one of radio resource control RRC signaling, media access control control element MAC CE signaling, or physical downlink control channel PDCCH signaling that is sent by a second network node; and
that the first correspondence to the twenty-sixth correspondence are indicated by physical downlink control channel PDCCH signaling comprises:

a HARQ process number of each carrier in the carrier set is indicated by the PDCCH signaling, wherein the PDCCH signaling carries indication information used to indicate at least one carrier or indication information used to indicate the at least one carrier set.

25. The network node according to any one of claims 21 to 24, wherein the carrier set comprises a first carrier set that shares a same HARQ process, and the transmission module is specifically configured to perform at least one of the following steps:

receiving first data by using the first carrier set, decoding the first data, and sending a first message to the second network node according to a first decoding result, wherein when the first decoding result indicates that the decoding succeeds, the first message comprises an acknowledgement ACK message, or when the first decoding result indicates that the decoding fails, the first message comprises a non-acknowledgement NACK message; and the first message is a signaling message sent to the second network node in a first time period in any one of the following manners: any carrier in the first carrier set, all carriers in the first carrier set, a carrier preconfigured according to radio resource control RRC signaling or media access control MAC signaling, or an UL carrier corresponding to a DL carrier corresponding to the first decoding result in the first carrier set; or
receiving the first data by using the first carrier set, decoding the first data corresponding to each carrier in the first carrier set, and sending multiple second messages to the second network node according to second decoding results, wherein when the second decoding result indicates that the decoding succeeds, the second message comprises the ACK message, or when the second decoding result indicates that the decoding fails, the second message comprises the NACK message; and the second message is a signaling message that is corresponding to each carrier in the first carrier set and that is sent to the second network node on each carrier, or a signaling message sent to the second network node on an UL carrier corresponding to a DL carrier that is corresponding to the second decoding result and that is in the first carrier set.

26. The network node according to claim 25, wherein the first message meets at least one of the following conditions:

when the first data received on each carrier in the first carrier set is successfully decoded, the first message comprises the ACK message;
when the first data received on any carrier in the first carrier set is successfully decoded, the first message comprises the ACK message;
when the first data received on each carrier in the first carrier set fails to be decoded, the first message comprises the NACK message; or when the first data received on any carrier in the first carrier set fails to be decoded, the first message comprises the NACK message.

27. The network node according to any one of claims 21 to 26, wherein the carrier set comprises a second carrier set that shares a same HARQ process, and the transmission module is further configured to perform at least one of the following steps:

sending second data to the second network node by using the second carrier set, and after receiving a third message corresponding to each carrier in the second carrier set, when determining that the third message comprises a NACK message corresponding to the second carrier set, determining that transmission of the second data fails, or when determining that the third message comprises an ACK message corresponding to the second carrier set, determining that the second data is successfully transmitted, wherein the third message is a signaling message that is corresponding to the second carrier set and that is sent to the network node by the second network node in a preset second time period in any one of the following manners: any carrier in the second carrier set, all carriers in the second carrier set, a carrier preconfigured according to the RRC signaling or the MAC signaling, or a carrier for sending downlink control information DCI; or

sending the second data to the second network node by using the second carrier set; and after receiving fourth messages, if each of the fourth messages comprises an ACK message, determining that the second data is successfully transmitted, or if any one of the fourth messages comprises an ACK message, determining that the second data is successfully transmitted; or if each of the fourth messages comprises a NACK message, determining that transmission of the second data fails, or if any one of the fourth messages comprises a NACK message, determining that transmission of the second data fails; or if none of the fourth messages is received, determining that transmission of the second data fails, or if any one of the fourth messages is not received, determining that transmission of the second data fails, wherein the fourth message is a signaling message that is corresponding to each carrier in the second carrier set and that is sent to the network node by the second network node on each carrier.

28. The network node according to claim 27, wherein the transmission module is further configured to perform at least one of the following steps:

selecting at least one carrier from the second carrier set to retransmit the second data; performing, on the carrier corresponding to the third message or the fourth message, an operation of retransmitting the second data; when the received fourth message corresponding to each carrier is a NACK message, starting an operation of retransmitting the second data; when the received fourth message corresponding to any carrier is a NACK message, starting an operation of retransmitting the second data; when the fourth messages corresponding to all carriers in the second carrier set are not received, starting an operation of retransmitting the second data; or when the fourth message corresponding to any carrier in the second carrier set is not received, starting an operation of retransmitting the second data.

29. The network node according to any one of claims 21 to 28, wherein after retransmitting the second data, the processing module further performs at least one of the following steps:

counting a variable Current-Transmit-Number corresponding to each carrier in the carrier set on which the second data is retransmitted, wherein all carriers in the carrier set are in a one-to-one correspondence with variables Current-Transmit-Number; or counting variables Current-Transmit-Number corresponding to all carriers in the carrier set, wherein a previous variable Current-Transmit-Number is incremented by 1 each time after the second data is retransmitted on any carrier in the carrier set; and the processing module further performs at least one of the following steps:

clearing a HARQ buffer when determining that a variable Current-Transmit-Number of the any carrier reaches a preset maximum value; clearing the HARQ buffer when determining that a variable Current-Transmit-Number of each carrier in the carrier set reaches a preset maximum value; or clearing the HARQ buffer when determining that each of the variables Current-Transmit-Number corresponding to all carriers in the carrier set reaches a preset maximum value.

30. The network node according to any one of claims 26 to 29, wherein the transmission module is specifically further configured to perform at least one of the following steps:

receiving the first data retransmitted by the second network node according to a preset third time period by using the first carrier set, wherein each carrier in the first carrier set is identified by a new data indicator NDI, and the NDI is used to indicate that the first data currently transmitted on a carrier is new data or retransmitted data; or after receiving a NACK response returned by the second network node according to the NACK or receiving no NACK response within a preset time, receiving the first data retransmitted by the second network node by using the third carrier set, wherein each carrier in the third carrier set is identified by an NDI, the NDI is used to indicate that the first data currently transmitted on a carrier is new data or retransmitted data, and the third carrier set is a carrier set with a failure in transmitting the first data, of the first carrier set.

31. The network node according to any one of claims 26 to 30, wherein the transmission module is specifically further configured to perform at least one of the following steps:

retransmitting the second data to the second network node according to a preset fourth time period by using the second carrier set, wherein each carrier in the second carrier set is identified by a new data indicator NDI, and the NDI is used to indicate that the second data currently transmitted on a carrier is new data or retransmitted data; or after determining that transmission of the second data fails, retransmitting the second data to the second network node by using a fourth carrier set, wherein each carrier in the eighth carrier set is identified by an NDI, the NDI is used to indicate that the fourth data currently transmitted on a carrier is new data or retransmitted data, and the fourth carrier set is an UL carrier set with a failure in transmitting the second data, of the second carrier set.

32. The network node according to any one of claims 21 to 31, wherein the carrier set comprises a fifth carrier set that is used to send the same data and that uses a separate HARQ process, and the transmission module is specifically further configured to perform at least one of the following steps:

sending third data to the second network node by using the fifth carrier set, and after receiving a fifth message, when determining that the fifth message comprises a NACK message corresponding to the fifth carrier set, determining that transmission of the third data fails, or when determining that the fifth message comprises an ACK message corresponding to the fifth carrier set, determining that the third data is successfully transmitted, wherein the fifth message is a signaling message that is corresponding to the second carrier set and that is sent to the network node by the second network node in a preset fifth time period in any one of the following manners: any carrier in the fifth carrier set, all carriers in the fifth carrier set, a carrier preconfigured according to the RRC signaling or the MAC signaling, or a carrier for sending the DCI; or sending the third data to the second network node by using the fifth carrier set, and after receiving sixth messages, when determining that the sixth messages comprise NACK messages corresponding to the fifth carrier set used to send the third data, determining that transmission of the third data fails, or when determining that the sixth messages comprise at least one ACK message, determining that the third data is successfully transmitted, wherein the sixth message is a signaling message that is corresponding to each carrier in the fifth carrier set and that is sent to the network node by the second network node on each carrier.

33. The network node according to any one of claims 21 to 32, wherein the carrier set comprises a sixth carrier set that is used to send the same data and that uses a separate HARQ process, and the transmission module is further configured to perform at least one of the following steps:

receiving fourth data by using the sixth carrier set, decoding the fourth data, and sending a seventh message to the second network node according to a third decoding result, wherein when the third decoding result indicates that the decoding succeeds, the seventh message comprises the ACK message, or when the third decoding result indicates that the decoding fails, the seventh message comprises the NACK message; and the seventh message is a signaling message sent to the second network node by the first network node in a sixth time period in any one of the following manners: any carrier in the sixth carrier set, all carriers in the sixth carrier set, a carrier preconfigured according to the RRC signaling or the MAC signaling, or an UL carrier corresponding to a DL carrier that is corresponding to the third decoding result and that is in the sixth carrier set; or receiving the fourth data by using the sixth carrier set, decoding the fourth data, and sending an eighth message to the second network node according to a fourth decoding result, wherein when the fourth decoding result indicates that the decoding succeeds, the fourth message comprises the ACK message, or when the fourth decoding result indicates that the decoding fails, the eighth message comprises the NACK message; and the eighth message is a signaling message that is corresponding to each carrier in the sixth carrier set and that is sent to the second network node on each carrier, or a signaling message sent to the second network node on an UL carrier corresponding to a DL carrier that is corresponding to the fourth decoding result and that is in the sixth carrier set.

34. The network node according to claim 32 or 33, wherein the transmission module is further configured to perform at least one of the following steps:

retransmitting the third data to the second network node according to a preset seventh time period by using the sixth carrier set, wherein each carrier in the sixth carrier set is identified by a new data indicator NDI, and the NDI is used to indicate that the third data currently transmitted on a carrier is new data or retransmitted data; or

after determining that transmission of the third data fails, retransmitting the third data to the second network node by using an eighth carrier set, wherein each carrier in the eighth carrier set is identified by an NDI, the NDI is used to indicate that the third data currently transmitted on a carrier is new data or retransmitted data, and the eighth carrier set is a carrier set with a failure in transmitting the third data, of the sixth carrier set.

35. The network node according to any one of claims 32 to 34, wherein the transmission module is further configured to perform at least one of the following steps:

receiving the fourth data retransmitted by the second network node according to a preset sixth time period by using the fifth carrier set, wherein each carrier in the fifth carrier set is identified by a new data indicator NDI, and the NDI is used to indicate that the fourth data currently transmitted on a carrier is new data or retransmitted data; or

after receiving a NACK response returned by the second network node according to the NACK or receiving no NACK response within the preset time, receiving the fourth data retransmitted by the second network node by using a seventh carrier set, wherein each carrier in the seventh carrier set is identified by an NDI, the NDI is used to indicate that the fourth data currently transmitted on a carrier is new data or retransmitted data, and the seventh carrier set is a carrier set with a failure in transmitting the fourth data, of the fifth carrier set.

36. The network node according to any one of claims 28 to 35, wherein the first time period, the second time period, the fifth time period, or the sixth time period is obtained according to any one of the following:

a different service type configuration;
a different data radio bearer DRB configuration;
a different carrier configuration;
a different HARQ process configuration; or
a configuration of the RRC signaling, the MAC signaling, or Packet Data Convergence Protocol PDCP signaling.

37. The network node according to any one of claims 22 to 36, wherein a HARQ process of each carrier is scheduled by a corresponding physical downlink control channel PDCCH, a HARQ process number and a redundancy version number that are corresponding to each carrier are indicated by the DCI, each carrier is uniquely corresponding to the PDCCH, and the DCI carries indication information of multiple carriers or indication information of the carrier set;
or,
the shared HARQ process is scheduled by a corresponding shared PDCCH, a HARQ process number and a redundancy version number that are corresponding to each DL carrier are indicated by the DCI, the shared HARQ process is uniquely corresponding to the shared PDCCH, the shared HARQ process is in a one-to-one correspondence with the carrier set, and there is at least one shared HARQ process.

38. The network node according to any one of claims 21 to 37, wherein when the carrier set comprises one carrier, the carrier comprises multiple scheduling units for transmitting same data; or
when the carrier set comprises more than two carriers, same data is transmitted on each carrier in the carrier set.

39. The network node according to any one of claims 21 to 38, wherein the processing module is further configured to:

combine data transmitted by the transmission module by using each carrier set of the carrier set, to obtain the data, and decode the data; and the transmission module is further configured to send, to the second network node according to a decoding result, a signaling message corresponding to the decoding result.

**40.** The network node according to any one of claims 21 to 39, wherein when the network node is user equipment UE, the transmission module is further configured to perform one of the following steps:

receiving at least one of DL data or DL signaling by using the at least one DL carrier set;
or
sending at least one of UL data or UL signaling by using the at least one UL carrier set.

**41.** A communications system, comprising:

the network node according to any one of claims 21 to 40.

A first network node determines, according to at least one of a first correspondence between a carrier set and a hybrid automatic repeat request HARQ process or a second correspondence between the carrier set and a HARQ entity, the HARQ process and/or the HARQ entity corresponding to the carrier set

<span>101</span>

The first network node receives and/or sends data and/or signaling according to the HARQ process or the HARQ entity by using the carrier set

<span>102</span>

FIG. 1

| Base station | UE |

201 & 202. Data A on a CC1, CC2, …, and CC8

203. R1, R2, …, and R8

204. PUCCH

205. Data A

206. R4', R5', and R7

207. On a CC12, CC13, and CC15

FIG. 2

| UE | | Base station |
|---|---|---|

301. Data B on a PUSCH on a CC9, CC10, ..., and CC16

302.  R9, R10, ..., and R16

303. PHICH

304. Data B

305. R9', R10', ..., and R16'

306.
On a CC1 to a CC7

FIG. 3

Processing module — 401

Transmission module — 402

FIG. 4

FIG. 5

# INTERNATIONAL SEARCH REPORT

International application No.

**PCT/CN2015/074582**

## A. CLASSIFICATION OF SUBJECT MATTER

H04W 72/04 (2009.01) i

According to International Patent Classification (IPC) or to both national classification and IPC

## B. FIELDS SEARCHED

Minimum documentation searched (classification system followed by classification symbols)

H04L; H04W; H04Q

Documentation searched other than minimum documentation to the extent that such documents are included in the fields searched

Electronic data base consulted during the international search (name of data base and, where practicable, search terms used)

CNPAT, CNKI, WPI, EPODOC: hybrid automatic repeat request, carrier set, carrier aggregation, resource, HARQ, multicarrier, carrier, down w link, multi+, channel, up w link, process, access, packet

## C. DOCUMENTS CONSIDERED TO BE RELEVANT

| Category* | Citation of document, with indication, where appropriate, of the relevant passages | Relevant to claim No. |
|---|---|---|
| X | CN 1758813 A (ZTE CORP.), 12 April 2006 (12.04.2006), description, pages 2-6 and 14-17 | 1-41 |
| A | WO 2009009964 A1 (DATANG MOBILE COMMUNICATIONS EQUIPMENT CO., LTD.), 22 January 2009 (22.01.2009), the whole document | 1-41 |
| A | CN 102160412 A (SHARP KABUSHIKI KAISHA), 17 August 2011 (17.08.2011), the whole document | 1-41 |
| A | WO 2012139291 A1 (RENESAS MOBILE CORPORATION), 18 October 2012 (18.10.2012), the whole document | 1-41 |

☐ Further documents are listed in the continuation of Box C. ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 08 December 2015 (08.12.2015) | **21 December 2015 (21.12.2015)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **LI, Kai** Telephone No.: (86-10) **62413120** |

Form PCT/ISA/210 (second sheet) (July 2009)

## INTERNATIONAL SEARCH REPORT
### Information on patent family members

| International application No. |
| --- |
| **PCT/CN2015/074582** |

| Patent Documents referred in the Report | Publication Date | Patent Family | Publication Date |
| --- | --- | --- | --- |
| CN 1758813 A | 12 April 2006 | WO 2007019807 A1 | 22 February 2007 |
| | | EP 1916790 A1 | 30 April 2008 |
| | | KR 20080044266 A | 20 May 2008 |
| | | US 2009116468 A1 | 07 May 2009 |
| WO 2009009964 A1 | 22 January 2009 | CN 101350708 A | 21 January 2009 |
| | | CN 101359972 A | 04 February 2009 |
| CN 102160412 A | 17 August 2011 | US 2011194499 A1 | 11 August 2011 |
| | | EP 2334115 A1 | 15 June 2011 |
| | | WO 2010032714 A1 | 25 March 2010 |
| WO 2012139291 A1 | 18 October 2012 | US 2014029489 A1 | 30 January 2014 |

Form PCT/ISA/210 (patent family annex) (July 2009)